# EUROPÄISCHE PATENTSCHRIFT

(11) **EP 4 168 594 B1**
(45) Veröffentlichungstag und Bekanntmachung des Hinweises auf die Patenterteilung: **27.08.2025**
(21) Anmeldenummer: 21735626.0
(22) Anmeldetag: 18.06.2021
(51) Int. Cl.: C13B 30/04, C13B 50/00, C13B 30/06, C13B 30/12

(54) **GERUCHSMASKIERUNG VON RÜBENZUCKER**
MASKING THE ODOR OF BEET SUGAR
MASQUAGE DE L'ODEUR DU SUCRE DE BETTERAVE

(30) Priorität: 18.06.2020 DE 102020207580
(43) Veröffentlichungstag der Anmeldung: 26.04.2023
(73) Patentinhaber: Südzucker AG, 68165 Mannheim (DE)
(72) Erfinder: BECCARD, Steffen, 55291 Saulheim (DE); BERNARD, Jörg, 67283 Albsheim (DE); FRENZEL, Stefan, 69469 Weinheim (DE); SOHN, Manuel, 67246 Dirmstein (DE); BÖHM, Valerie, 95152 Selbitz (DE); KLIß, Rainer, 64354 Reinheim (DE)
(74) Vertreter: Schrell, Andreas
(86) Internationale Anmeldenummer: PCT/EP2021/066615
(87) Internationale Veröffentlichungsnummer: WO 2021/255240

(56) Entgegenhaltungen:
- EP-A1- 3 392 352
- WO-A1-2014/033621
- WO-A2-03/018848

## Beschreibung

Die vorliegende Erfindung betrifft Verfahren zur Herstellung von getrockneten Rohzuckerpräparationen aus Zuckerrübenmaterial sowie die mittels dieser Verfahren hergestellten getrockneten Rohzuckerpräparationen.

Saccharose kann industriell aus der Zuckerrübe gewonnen werden. Die Extraktion des Zuckers aus der Zuckerrübe erfolgt durch heißes Wasser. Dabei werden die natürlichen, wasserlöslichen Bestandteile der Zuckerrübe ebenfalls gelöst und sind somit im Extrakt (Rohsaft) enthalten. Dieser Rohsaft wird von organischen Bestandteilen gereinigt (Dünnsaft), aufkonzentriert (Dicksaft) und die im Dicksaft enthaltene Saccharose auskristallisiert und in Form eines weißen Zuckers abgetrennt. Trotz der beschriebenen Aufreinigungsschritte haften diesem Zucker immer noch Spuren von in der Zuckerrübe vorkommenden Aromastoffen an. Einer dieser Aromastoffe ist das sog. Geosmin. Hierbei handelt sich um einen bicyclischen Alkohol, welcher einen ausgeprägten erdigmuffigen Geruch und Geschmack besitzt und von Zuckerkonsumenten als sehr unangenehm empfunden wird. Dieser Stoff kann bereits in geringsten Mengen (Geruchsschwelle = 0,1 ppb, also 1 Molekül unter 10 Milliarden Molekülen) wahrgenommen werden und verursacht daher große Schwierigkeiten bei der Aufreinigung von Saccharose zum Erhalt eines angenehm riechenden Zuckers. Um einen derartig angenehm riechenden Zucker zu erhalten, sind aufwändige Umkristallisierungsschritte der unmittelbar aus dem Dicksaft auskristallisierten Zuckerpräparation notwendig, die einerseits kostenaufwändig und andererseits zeitaufwändig sind und zur Bereitstellung eines hochraffinierten weißen Zuckers führen.

Saccharose kann ebenfalls aus dem in subtropischen und tropischen Klimazonen beheimaten Zuckerrohr gewonnen werden. Zuckerrohr enthält eine sehr viel geringere Menge an Geosmin als die Zuckerrübe. Daher ist es deutlich einfacher, eine angenehm riechende Saccharose aus Zuckerrohr als aus der Zuckerrübe zu erhalten. Saccharose aus Zuckerrohr wird von vielen Konsumenten als angenehmer im Geruch als Saccharose aus der Zuckerrübe wahrgenommen.

Herkömmlicherweise wird dieser von vielen Konsumenten als unangenehm empfundene Geruch durch besonders intensives Aufreinigen beseitigt und wie beschrieben eine sehr reine Saccharose erhalten. Jeder Aufreinigungsschritt geht jedoch mit einem Materialverlust einher. So wird beim Abwaschen von an kristalliner Saccharose anhaftenden Resten von aus der Dicksaft-Kristallisation stammender Mutterlauge ein teilweises Auflösen der Saccharose bewirkt, was zu Saccharoseverlusten führt. Die Wirtschaftlichkeit derartiger Verfahren lässt sich daher nicht in jedem Fall darstellen.

Aus der EP 3 392 352 A1 ist es bekannt, einen Rohzucker aus Zuckerrübenmaterial bereitzustellen, der sich durch einen Geruch und Geschmack auszeichnet, der vom Konsumenten akzeptiert wird. Zu diesem Zweck lehrt diese Schrift Rohzucker herzustellen, indem Dicksaft oder Grünablauf aus einem Zuckerrübenextraktionsverfahren auf mindestens 120 °C erhitzt und Zuckerkristallen hinzugegeben wird.

Durch die Erhitzung des Dicksaftes oder des Grünablaufs auf 120 °C bis 150 °C werden die in diesen Flüssigkeiten vorhandenen freien Aminosäuren eliminiert. Es finden Maillard-Reaktionen und Strecker-Abbau sowie Zuckerkaramellisierungen statt. Nach Vermischen der hocherhitzten Flüssigkeiten mit den Zuckerkristallen wird gemäß der EP 3 392 352 A1 eine akzeptabel riechende und schmeckende Rohzuckerpräparation erhalten. Die beschriebene Verfahrensweise verändert allerdings durch das Erhitzen die stoffliche Zusammensetzung der Rohzuckerpräparation erheblich, insbesondere entstehen neue, in der Zuckerrübe nicht vorhandene Substanzen wie Maillard-Produkte, wobei gleichzeitig in der Zuckerrübe vorhandene Substanzen eliminiert werden. Zudem ist der Erhitzungsschritt aus wirtschaftlicher Sicht nachteilig.

Es besteht daher nach wie vor ein Bedarf an Verfahren zur Bereitstellung von geruchs- und geschmacksakzeptablen Rohzuckerpräparationen aus der Zuckerrübe, die ein hohes Maß an Naturbelassenheit aufweisen und sich in möglichst einfacher Weise technologisch und wirtschaftlich effizient herstellen lassen.

Der vorliegenden Erfindung liegt daher das technische Problem zugrunde, die vorstehenden Nachteile zu überwinden, insbesondere ein Verfahren bereitzustellen, das es in kostengünstiger und effizienter Weise ermöglicht, einen wohlschmeckenden und angenehmen riechenden Rohzucker aus Zuckerrübenmaterial bereitzustellen, der in bevorzugter Ausgestaltung naturbelassen ist und sich insbesondere durch einen hohen Anteil natürlicher und wertvoller Inhaltstoffe auszeichnet. Wünschenswert ist es darüber hinaus, dass der erhaltene Rohzucker so wenige stoffliche Veränderungen wie möglich gegenüber der stofflichen Zusammensetzung des Ausgangsrübenmaterials aufweist, das heißt insbesondere so wenig wie möglich prozessiert wurde. Der vorliegenden Erfindung liegt auch das technische Problem zugrunde, einen Rohzucker bereitzustellen, der sich durch eine besonders vorteilhafte Zusammensetzung an Aromastoffen auszeichnet.

Die vorliegende Erfindung löst das ihr zugrundeliegende technische Problem durch die Bereitstellung der Lehren der unabhängigen und abhängigen Ansprüche und der Beschreibung.

Die vorliegende Erfindung betrifft ein Verfahren zur Herstellung einer getrockneten Rohzuckerpräparation aus Zuckerrübenmaterial umfassend die Verfahrensschritte:
a) Bereitstellen von Zuckerrübenmaterial,
b) Durchführen einer Rohsaftextraktion des Zuckerrübenmaterials zum Erhalt von Rohsaft,
c) Durchführen einer Rohsaftreinigung zum Erhalt von Dünnsaft,
d) Aufkonzentrieren von Dünnsaft zum Erhalt von Dicksaft, und
e) Durchführen einer Kristallisation des Dicksafts zum Erhalt einer ersten Magmapräparation enthaltend eine erste Saccharosekristallfraktion und eine erste Mutterlauge,
f) Einstellen des Gehalts an Saccharosekristallfraktion und Mutterlauge in der ersten Magmapräparation zum Erhalt einer Magmapräparation enthaltend 76 bis 98 Gew.-% Saccharosekristallfraktion und 2 bis 24 Gew.-% Mutterlauge (jeweils bezogen auf das Gesamtgewicht der Magmapräparation) und
g) Trocknen der in Verfahrensschritt f) erhaltenen Magmapräparation zum Erhalt der getrockneten Rohzuckerpräparation.

Die vorliegende Verfahrensweise sieht die Herstellung einer getrockneten Rohzuckerpräparation aus Zuckerrübenmaterial vor, umfassend in einem ersten Verfahrensschritt a) das Bereitstellen von Zuckerrübenmaterial, in einem anschließenden Verfahrensschritt b) das Durchführen einer Rohsaftextraktion des Zuckerrübenmaterials zum Erhalt von Rohsaft, in einem anschließenden Verfahrensschritt c) das Durchführen einer Rohsaftreinigung zum Erhalt von Dünnsaft, in einem anschließenden Verfahrensschritt d) das Aufkonzentrieren des Dünnsafts zum Erhalt von Dicksaft, in einem anschließenden Verfahrensschritt e) das Durchführen einer Kristallisation des Dicksafts, wobei im Rahmen dieser Kristallisation eine erste Magmapräparation, enthaltend eine erste Saccharosekristallfraktion und eine erste Mutterlauge erhalten wird, wobei in einem anschließenden Verfahrensschritt f) der Gehalt an Saccharosekristallfraktion und Mutterlauge in der aus der Dicksaftkristallisation erhaltenen Magmapräparation so eingestellt wird, dass eine Magmapräparation, enthaltend 76 bis 98 Gew.-% Saccharosekristallfraktion und 2 bis 24 Gew.-% Mutterlauge (jeweils bezogen auf das Gesamtgewicht der Magmapräparation) erhalten wird, und wobei in einem anschließenden Verfahrensschritt g) die in Verfahrensschritt f) erhaltene Magmapräparation zum Erhalt einer getrockneten Rohzuckerpräparation getrocknet wird. In besonders bevorzugter Ausführungsform wird die in Verfahrensschritt f) erhaltene Magmapräparation unmittelbar ohne zwischengeschaltete Verfahrensschritte, insbesondere ohne Kristallisations-, Zentrifugations- und/oder Filtrationsschritte, in Verfahrensschritt g) getrocknet.

Diese getrocknete Rohzuckerpräparation zeichnet sich überraschenderweise und in vorteilhafter Form durch einen angenehm riechenden, insbesondere nussig-karamelligen Geruch, einen guten Geschmack und, in bevorzugter Ausführungsform, einen hohen Grad an Naturbelassenheit aus. Der üblicherweise auftretende unangenehme Geruch von Rübenzucker, der konventionell erst durch ein sehr intensives Aufreinigen beseitigt werden kann, ist erfindungsgemäß in der erhaltenen Rohzuckerpräparation nicht wahrnehmbar. Die erfindungsgemäß erhaltene Rohzuckerpräparation ist vielmehr in bevorzugter Ausführungsform durch einen Gehalt vieler natürlicher und wertvoller Inhaltsstoffe gekennzeichnet und weist daher nicht nur technologische, sondern auch vermarktungstechnische Vorteile auf. Die erfindungsgemäß erhaltene Rohzuckerpräparation eignet sich daher vorzüglich unmittelbar als Konsumprodukt.

Darüber hinaus wurde die erfindungsgemäß erhaltene Rohzuckerpräparation in bevorzugter Ausführungsform nur wenigen Prozessschritten unterzogen, insbesondere unter Vermeidung einer stofflichen Änderung der in der Zuckerrübe, also dem Ausgangsmaterial, ursprünglich vorhandenen Stoffe. Darüber hinaus ist im Rahmen der erfindungsgemäßen Herstellweise die Zusammensetzung der erhaltenen Rohzuckerpräparation im Vergleich zu dem Zuckerrübenausgangsmaterial so wenig wie möglich verändert worden.

Die erfindungsgemäße Lehre sieht demgemäß insbesondere vor, dass in Verfahrensschritt g) eine ganz bestimmte Magmapräparation einem Trocknungsschritt unterzogen wird, das heißt eine Magmapräparation, die gemäß Verfahrensschritt f) zusätzlich zu einem Gehalt von 76 bis 98 Gew.-% Saccharosekristallfraktion eine flüssige Phase in Form von 2 bis 24 Gew.-% Mutterlauge (jeweils bezogen auf das Gesamtgewicht der Magmapräparation) aufweist. Die erfindungsgemäße Lehre sieht, anders als es in vielen üblichen Verfahren der Fall ist, also vor, dass dem Trocknungsschritt eine einen signifikanten Anteil an Mutterlauge enthaltende Magmapräparation zugeführt wird, also eine Saccharosekristallfraktion, die zusammen mit einem signifikanten Anteil an Mutterlauge vorliegt und in dieser Form unmittelbar getrocknet wird. Die erfindungsgemäße Lehre sieht demgemäß vor, dass dem Trocknungsschritt gezielt und bewusst eben keine Saccharosekristallfraktion zugeführt wird, die von überschüssiger Mutterlauge befreit wurde. Im Gegenteil wird der Trocknungsprozess gemäß Verfahrensschritt g) mit einer Magmapräparation durchgeführt, die 76 bis 98 Gew.-% Saccharosekristallfraktion und 2 bis 24 Gew.-% Mutterlauge (jeweils bezogen auf das Gesamtgewicht der Magmapräparation) aufweist. Eine erfindungsgemäß zu trocknende Magmapräparation zeichnet sich einerseits durch die unmittelbare Herkunft der Saccharosekristallfraktion aus dem Dicksaft und andererseits durch die Anwesenheit einer bestimmten Mutterlauge, insbesondere einer ersten und zweiten Mutterlauge, aus, welche ebenfalls aus einem Zuckerrübenmaterial-Extraktionsverfahren stammt, vorzugsweise unmittelbar oder mittelbar aus dem Dicksaft stammt und durch ihre spezifische Zusammensetzung zu den vorteilhaften Effekten der vorliegenden Erfindung beiträgt. Das Trocknen einer solchen Magmapräparation führt in überraschender und vorteilhafter Weise zur Bereitstellung einer Rohzuckerpräparation, die die vorgenannten Vorteile aufweist, insbesondere keinen unangenehmen Geruch aufweist.

In einer besonders bevorzugten Ausführungsform sieht die vorliegende Erfindung vor, dass in einem Verfahrensschritt x) zu der in Verfahrensschritt f) erhaltenen Magmapräparation enthaltend 76 bis 98 Gew.-% Saccharosekristallfraktion und 2 bis 24 Gew.-% Mutterlauge (jeweils bezogen auf das Gesamtgewicht der Magmapräparation) vor dem Durchführen von Verfahrensschritt g) Puderzucker hinzugegeben wird. Die erfindungsgemäß besonders bevorzugte Zugabe von Puderzucker in Verfahrensschritt x) führt überrascherweise zu einer besonders lagerstabilen Rohzuckerpräparation. In besonders bevorzugter Ausführungsform wird der Puderzucker in Verfahrensschritt x) in einer Menge von 1 bis 25 Gew.-%, insbesondere 5 bis 20 Gew.-%, insbesondere 7 bis 15 Gew.-% und insbesondere 8 bis 10 Gew.-% ((jeweils bezogen auf das Gesamtgewicht der nach Zugabe des Puderzuckers erhaltenen Magmapräparation) zugegeben.

In einer besonders bevorzugten Ausführungsform sieht die vorliegende Erfindung vor, das Trocknen einer in Verfahrensschritt f) erhaltenen Magmapräparation in Verfahrensschritt g) durch Zuführen von Heißluft oder unter reduziertem Druck durchzuführen.

Ohne an die Theorie gebunden zu sein, wird durch die in der zu trocknenden Magmapräparation vorhandene Mutterlauge eine Reihe an Stoffen in den Trocknungsprozess eingetragen, die den üblicherweise in der Zuckerrübe vorkommenden Geosmin-Geruch und -Geschmack maskiert. Da in erfindungsgemäß bevorzugter Ausführungsform die in der zu trocknenden Magmapräparation vorhandene Mutterlauge aus einem Gewinnungsverfahren für Zucker aus zum Beispiel Zuckerrübe stammt, insbesondere eine aus einer Dicksaftkristallisation stammende Mutterlauge ist, werden viele natürliche wertvolle Inhaltsstoffe in die getrocknete Rohzuckerpräparation überführt und valorisieren diese. Im Stand der Technik wird üblicherweise die Mutterlauge vor dem Trocknen mittels Zentrifugation und/oder Filtration soweit wie möglich entfernt, insbesondere Anteile über 1 Gew.-% Mutterlauge (bezogen auf das Gesamtgewicht der zu trocknenden Magmapräparation) entfernt. Nach Zentrifugation oder/und Filtration ist dann nur noch eine sehr geringe Menge an den Kristallen anhaftende Mutterlauge vorhanden, die sich durch übliche Zentrifugation und Filtrationsschritte nicht entfernen lässt.

Die Erfindung sieht demgemäß in einem ersten Verfahrensschritt a) das Bereitstellen von Zuckerrübenmaterial, insbesondere Zuckerrübenschnitzeln, vor, die im Anschluss in einem Verfahrensschritt b) einer Rohsaftextration, insbesondere einer Heißwasserextraktion, zum Beispiel in einem Gegenstromverfahren, unterzogen wird und zum Erhalt eines Rohsaftes führt. Der Rohsaft wird in einem Verfahrensschritt c) zum Erhalt von Dünnsaft gereinigt, wobei bevorzugt an sich übliche Rohsaftreinigungsschritte eingesetzt werden können, beispielsweise der Einsatz von gebranntem Kalk und Kalkmilch sowie gegebenenfalls Koagulations- und Flockungshilfsmitteln. In einem weiteren Verfahrensschritt d) wird der erhaltene Dünnsaft, insbesondere in einer Verdampfstation, in einem vorzugsweise mehrstufigen Prozess, eingedickt und so ein Dicksaft erhalten, der in einem anschließenden Verfahrensschritt e) auskristallisiert wird, sodass eine erste Magmapräparation erhalten wird.

In einer bevorzugten Ausführungsform der vorliegenden Erfindung wird gemäß Verfahrensschritt c) eine Rohsaftreinigung zum Erhalt von Dünnsaft durchgeführt, insbesondere mithilfe von mindestens einem alkalisierenden Reagenz, mindestens einem Flockungshilfsmittel, mindestens einem Flockungsmittel, insbesondere Copolymer, insbesondere Copolymer aus Acrylamid und Natriumacrylat, mindestens einem Carbonatations-Reagenz, insbesondere Kohlenstoffdioxid, und/oder mindestens einer Filtration.

In besonders bevorzugter Ausführungsform umfasst die Rohsaftreinigung mindestens eine Vorkalkung, mindestens eine Hauptkalkung und mindestens eine Carbonation, insbesondere unter Nutzung mindestens eines alkalisierenden Reagenzes, wobei in bevorzugter Ausführungsform mindestens ein Flockungsmittel und/oder mindestens ein Flockungshilfsmittel, vor, während oder nach der Hauptkalkung hinzugegeben wird. In besonders bevorzugter Ausführungsform können zwei Carbonationen durchgeführt werden. In besonders bevorzugter Ausführungsform umfasst die Rohsaftreinigung auch mindestens eine Filtration.

In einer bevorzugten Ausführungsform der vorliegenden Erfindung ist das in Verfahrensschritt c) zur Rohsaftreinigung eingesetzte alkalisierende Reagenz mindestens eine anorganische Base, insbesondere mindestens eine anorganische Base ausgewählt aus der Gruppe bestehend aus Kalk (Calciumcarbonat), Kalkmilch (Calciumhydroxid), Natronlauge (Natriumhydroxid) und Soda (Natriumhydrogencarbonat).Die Erfindung sieht also in einem Verfahrensschritt e) das Erhalten einer ersten Magmapräparation, enthaltend eine erste Saccharosekristallfraktion und eine erste Mutterlauge vor.

In einer weiteren bevorzugten Ausführungsform der vorliegenden Erfindung ist vorgesehen, dass der Saccharose-Gehalt der aus der Kristallisation von Dicksaft stammenden ersten Magmapräparation gemäß Verfahrensschritt e) 55 bis 92 Gew.-%, insbesondere 55 bis 90 Gew.-%, insbesondere 60 bis 87 Gew.-% (bezogen auf das Gesamtgewicht der ersten Magmapräparation) beträgt.

In einer weiteren bevorzugten Ausführungsform der vorliegenden Erfindung ist vorgesehen, dass der Saccharose-Gehalt der aus der Kristallisation von Dicksaft stammenden ersten Magmapräparation gemäß Verfahrensschritt e) mindestens 90 Gew.-%, insbesondere mindestens 92 Gew.-%, insbesondere mindestens 97 Gew.-% (bezogen auf das Gesamtgewicht der Trockenmasse der Magmapräparation) beträgt.

In einer weiteren bevorzugten Ausführungsform der vorliegenden Erfindung ist vorgesehen, dass das Durchführen einer Kristallisation in Verfahrensschritt e) das Durchführen einer Verdampfungskristallisation ist, insbesondere einer Vakuumverdampfungskristallisation.

In einer besonders bevorzugten Ausführungsform der vorliegenden Erfindung wird die Kristallisation gemäß Verfahrensschritt e) bei einem Druck von 100 bis 300, insbesondere 150 bis 250, insbesondere 180 bis 220, insbesondere 200 mbar durchgeführt. In einer besonders bevorzugten Ausführungsform wird die Kristallisation gemäß Verfahrensschritt e) bei einem Druck von 180 bis 220 mbar durchgeführt.

In einer besonders bevorzugten Ausführungsform der vorliegenden Erfindung wird die Kristallisation gemäß Verfahrensschritt e) bei einer Temperatur von 25 bis 100 °C, insbesondere 40 bis 100 °C, insbesondere 60 bis 100 °C, insbesondere 65 bis 85 °C, durchgeführt. In einer besonders bevorzugten Ausführungsform der vorliegenden Erfindung beträgt die Temperatur gemäß Verfahrensschritt e) 65 bis 80 °C.

In einer besonders bevorzugten Ausführungsform der vorliegenden Erfindung beträgt der Trockensubstanzgehalt der in Verfahrensschritt e) erhaltenen ersten Magmapräparation 75 bis 95 Gew.-%, insbesondere 80 bis 95 Gew.-%, insbesondere 80 bis 93 Gew.-% (jeweils bezogen auf das Gesamtgewicht der ersten Magmapräparation).

In einer besonders bevorzugten Ausführungsform beträgt der Gehalt an Saccharosekristallfraktion der in Verfahrensschritt e) erhaltenen ersten Magmapräparation mindestens 40 Gew.-%, insbesondere mindestens 50 Gew.-%, insbesondere mindestens 60 Gew.-%, insbesondere mindestens 70 Gew.-% (jeweils bezogen auf das Gesamtgewicht der ersten Magmapräparation).

In einer besonders bevorzugten Ausführungsform kann die Kristallisation gemäß Verfahrensschritt e) in Form einer Kühlungskristallisation, einer Verdampfungskristallisation, insbesondere Vakuumverdampfungskristallisation, oder einer Vakuumkristallisation durchgeführt werden. Im Rahmen einer Verdampfungskristallisation wird das Lösemittel, das heißt Wasser, verdampft und so die Löslichkeitsgrenze überschritten. Das Lösemittel kann durch Erhitzen und/oder Anlegen eines Unterdrucks verdampft werden. Eine Kombination von Erhitzen und Anlegen eines Unterdrucks zur Kristallisation wird erfindungsgemäß als Vakuumverdampfungskristallisation bezeichnet. Im Rahmen einer Kühlungskristallisation wird durch Reduktion der Temperatur die Löslichkeitsgrenze überschritten. Im Rahmen einer Vakuumkristallisation wird durch Anlegen eines Unterdrucks Lösemittel entzogen und so die Lösung abgekühlt und die Löslichkeitsgrenze überschritten.

In besonders bevorzugter Ausführungsform wird die Kristallisation gemäß Verfahrensschritt e) als Vakuumverdampfungskristallisation durchgeführt.

In besonders bevorzugter Ausführungsform wird die Kristallisation des Dicksafts gemäß Verfahrensschritt e) als Vakuumverdampfungskristallisation bei einem Druck von 100 bis 400 mbar, insbesondere 150 bis 250 mbar, insbesondere 180 bis 220 mbar, insbesondere 200 mbar und einer Temperatur von 25 °C bis 100 °C, insbesondere 40 bis 100 °C, insbesondere 60 bis 100 °C, durchgeführt.

In einem anschließenden Verfahrensschritt f) wird die in Verfahrensschritt e) erhaltene erste Magmapräparation auf einen Gehalt an kristalliner Saccharose, das heißt Saccharosekristallfraktion, von 76 bis 98 Gew.-%, insbesondere 84 bis 94 Gew.-%, insbesondere 87 bis 98 Gew.-% (jeweils bezogen auf das Gesamtgewicht der Magmapräparation) und 2 bis 24 Gew.-%, insbesondere 6 bis 16 Gew.-% , insbesondere 2 bis 13 Gew.-% Mutterlauge (jeweils bezogen auf das Gesamtgewicht der Magmapräparation) eingestellt und so eine Magmapräparation erhalten.

Die in dieser Magmapräparation vorhandene Mutterlauge kann in Form einer ersten Mutterlauge ebenfalls aus der Dicksaftpräparation stammen, kann aber auch anderen Ursprungs sein, zum Beispiel eine zweite oder dritte Mutterlauge sein.

Das Einstellen des Gehalts an kristalliner Saccharose, das heißt Saccharosekristallfraktion, und des Mutterlaugengehalts in Verfahrensschritt f) kann erfindungsgemäß auf unterschiedliche Weise erfolgen.

Sofern in Verfahrensschritt e) eine erste Magmapräparation erhalten wird, enthaltend eine Saccharosekristallfraktion und eine Mutterlauge, in der der Mutterlaugengehalt größer als 24 Gew.-% Mutterlauge (bezogen auf das Gesamtgewicht der Magmapräparation) ist, ist erfindungsgemäß bevorzugt in Verfahrensschritt f), insbesondere in Verfahrensschritten f1) und f2), ein zumindest teilweises Abtrennen der Mutterlauge vorgesehen.

Erfindungsgemäß ist es in einer Ausführungsform möglich, dass in Verfahrensschritt f) ein Abtrennen von zumindest einem Anteil der in Verfahrensschritt e) erhaltenen ersten Mutterlauge von der ersten Saccharosekristallfraktion durch Zentrifugation, Filtration oder beides so erfolgt, dass in Verfahrensschritt f) in der erhaltenen Magmapräparation ein Mutterlaugengehalt von 2 bis 24 Gew.-% und ein Gehalt an Saccharosekristallfraktion von 76 bis 98 Gew.-% (jeweils bezogen auf das Gesamtgewicht der Magmapräparation) erhalten wird. Die Erfindung sieht in dieser Ausführungsform also ausgehend von einer in Verfahrensschritt e) erhaltenen, eine erste Mutterlauge und eine erste Saccharosekristallfraktion enthaltenden ersten Magmapräparation vor, den Anteil an Mutterlauge an der in Verfahrensschritt e) erhaltenen Magmapräparation durch zumindest teilweises Abtrennen der Mutterlauge durch Zentrifugation, Filtration oder beides bis zu einem Mutterlaugengehalt von 2 bis 24 Gew.-% (bezogen auf das Gesamtgewicht der Magmapräparation) zu reduzieren.

Die vorliegende Erfindung betrifft daher auch ein Verfahren gemäß der Verfahrensschritte e), f) und g), wobei Verfahrensschritt f) in Form von Verfahrensschritt f1) durchgeführt wird und wobei Verfahrensschritt f1) ein teilweises Abtrennen der Mutterlauge durch Zentrifugation oder/und Filtration bis zu einem Mutterlaugengehalt von 2 bis 24 Gew.-% zum Erhalt einer Magmapräparation enthaltend 76 bis 98 Gew.-% einer Saccharosekristallfraktion und 2 bis 24 Gew.-% Mutterlauge (jeweils bezogen auf das Gesamtgewicht der Magmapräparation) vorsieht.

In einer besonders bevorzugten Ausführungsform ist vorgesehen, dass in Verfahrensschritt f1) 50 bis 97 Gew.-% der ersten Mutterlauge (bezogen auf das Gesamtgewicht der ersten Mutterlauge) von der Magmapräparation durch Zentrifugation oder/und Filtration abgetrennt wird, sodass eine Magmapräparation enthaltend 76 bis 98 Gew.-% einer Saccharosekristallfraktion und 2 bis 24 Gew.-% Mutterlauge (bezogen auf das Gesamtgewicht der Magmapräparation) erhalten wird.

In einer weiteren Ausführungsform der vorliegenden Erfindung kann das in Verfahrensschritt f) vorgesehene Einstellen des Gehaltes an Saccharosekristallfraktion und Mutterlauge in der Magmapräparation auf den gewünschten Bereich von 76 bis 98 Gew.-% Saccharosekristallfraktion und 2 bis 24 Gew.-% Mutterlauge (jeweils bezogen auf das Gesamtgewicht der Magmapräparation) dadurch erfolgen, dass in einem Verfahrensschritt f2) zumindest teilweise, insbesondere teilweise oder vollständig, erste Mutterlauge von der ersten Saccharosekristallfraktion der in Verfahrensschritt e) erhaltenen Magmapräparation durch Zentrifugation oder/und Filtration abgetrennt wird und in einem Verfahrensschritt f3) eine andere Mutterlauge der Saccharosekristallfraktion hinzugegeben wird, sodass eine Magmapräparation erhalten wird, enthaltend 76 bis 98 Gew.-% einer Saccharosekristallfraktion und 2 bis 24 Gew.-% Mutterlauge (jeweils bezogen auf das Gesamtgewicht der Magmapräparation). In dieser Ausführungsform wird in Verfahrensschritt f) der gewünschte Gehalt an Saccharosekristallfraktion und Mutterlauge also nicht allein dadurch eingestellt, dass der Anteil der in Verfahrensschritt e) erhaltenen ersten Mutterlauge einer ersten Magmapräparation durch Zentrifugation oder/und Filtration reduziert, das heißt teilweise oder vollständig abgetrennt wird, sondern indem teilweise oder vollständig die in Verfahrensschritt e) vorhandene erste Mutterlauge abgetrennt und eine andere Mutterlauge zugegeben wird, sodass der erwünschte Gehalt an Saccharosekristallfraktion und Mutterlauge in Verfahrensschritt f) eingestellt wird.

In einer besonders bevorzugten Ausführungsform sieht die Erfindung vor, dass Verfahrensschritt f) in Form der Verfahrensschritte f2) und f3) durchgeführt wird, insbesondere dass in Verfahrensschritt f2) die erste Mutterlauge von der ersten Saccharosekristallfraktion durch Zentrifugation oder/und Filtration vollständig abgetrennt wird und der so erhaltenen ersten Saccharosekristallfraktion in Verfahrensschritt f3) eine andere Mutterlauge zum Erhalt einer Magmapräparation enthaltend 76 bis 98 Gew.-% einer Saccharosekristallfraktion und 2 bis 24 Gew.-% Mutterlauge (bezogen auf das Gesamtgewicht der Magmapräparation) hinzugefügt wird.

In einer besonders bevorzugten Ausführungsform ist vorgesehen, dass nach Durchführung von Verfahrensschritt f2) nach vollständiger Abtrennung der ersten Mutterlauge die erhaltene Saccharosekristallfraktion i) gewaschen, ii) getrocknet oder iii) gewaschen und getrocknet wird, bevor gemäß Verfahrensschritt f3) eine andere Mutterlauge hinzugefügt wird.

In einer besonders bevorzugten Ausführungsform sieht die Erfindung vor, dass Verfahrensschritt f) in Form der Verfahrensschritte f2) und f3) durchgeführt wird, insbesondere dass in Verfahrensschritt f2) die Mutterlauge, insbesondere erste Mutterlauge, von der, insbesondere ersten, Saccharosekristallfraktion durch Zentrifugation oder/und Filtration teilweise abgetrennt wird und der so erhaltenen, insbesondere ersten, Saccharosekristallfraktion, in Verfahrensschritt f3) eine andere Mutterlauge zum Erhalt einer Magmapräparation, enthaltend 76 bis 98 Gew.-% einer Saccharosekristallfraktion und 2 bis 24 Gew.-% Mutterlauge (bezogen auf das Gesamtgewicht der Magmapräparation) hinzugefügt wird.

In einer weiteren bevorzugten Ausführungsform der vorliegenden Erfindung ist vorgesehen, dass der in Verfahrensschritt f) abgetrennte, mindestens eine Anteil der ersten Mutterlauge, also die aus einer Dicksaftkristallisation stammenden Mutterlauge, einer Kristallisation unterzogen wird zum Erhalt einer zweiten Magmapräparation, enthaltend eine zweite Saccharosekristallfraktion und eine zweite Mutterlauge.

In einer besonders bevorzugten Ausführungsform der vorliegenden Erfindung ist vorgesehen, dass vor der Kristallisation des mindestens einen Anteils der ersten Mutterlauge diese mit Dicksaft, insbesondere erhalten in Verfahrensschritt d), vermischt wird.

In einer besonders bevorzugten Ausführungsform wird die so erhaltene zweite Mutterlauge in einem Verfahren der vorliegenden Erfindung, umfassend die Verfahrensschritte e), f2), f3) und g) in Verfahrensschritt f3) einer Saccharosekristallfraktion, insbesondere einer ersten Saccharosekristallfraktion, hinzugegeben. In einer besonders bevorzugten Ausführungsform wird die zweite Mutterlauge in Verfahrensschritt f3) einer ersten Saccharosekristallfraktion hinzugegeben, das heißt die zweite Mutterlauge wird einer aus einer Dicksaftkristallisation stammenden ersten Saccharosekristallfraktion hinzugefügt, insbesondere nach vollständiger Abtrennung der ersten Mutterlauge in Verfahrensschritt f2).

In einer anderen Ausführungsform der vorliegenden Erfindung kann auch vorgesehen sein, dass die in Verfahrensschritt f) in Form von in Verfahrensschritt f3) hinzugefügte andere Mutterlauge eine erste, zweite und/oder eine weitere Mutterlauge ist.

In einer besonders bevorzugten Ausführungsform der vorliegenden Erfindung ist die Mutterlauge eine erste Mutterlauge.

In einer besonders bevorzugten Ausführungsform der vorliegenden Erfindung ist die Mutterlauge eine zweite Mutterlauge.

In einer bevorzugten Ausführungsform der vorliegenden Erfindung ist die Mutterlauge, insbesondere die erste, zweite und/oder weitere Mutterlauge, durch einen Gehalt an mindestens einem Aroma, insbesondere DMDS (Dimethyldisulfid), Pyrazin, 2-MP (2-Methylpyrazin), 2,5-DMP (2,5-Dimethylpyrazin), 2-EP (2-Ethylpyrazin), 2,3-DMP (2,3-Dimethylpyrazin), 2,3,5-TMP (2,3,5-Trimethylpyrazin), 2-E-3,6-DMP (2-Ethyl-3,6-dimethylpyrazin), 2-E-3,5-DMP (2-Ethyl-3,5-dimethylpyrazin), Tetramethylpyrazin (2,3,5,6-Tetramethylpyrazin), 2,3-DE-5-MP (2,3-Diethyl-5-methylpyrazin), SBMOP (2-sec.-Butyl-3-methoxypyrazin) oder Geosmin gekennzeichnet.

In einer besonders bevorzugten Ausführungsform ist die Mutterlauge, insbesondere die erste, zweite und/oder weitere Mutterlauge durch Gehalte an den Aromen DMDS (Dimethyldisulfid), Pyrazin, 2-MP (2-Methylpyrazin), 2,5-DMP (2,5-Dimethylpyrazin), 2-EP (2-Ethylpyrazin), 2,3-DMP (2,3-Dimethylpyrazin), 2,3,5-TMP (2,3,5-Trimethylpyrazin), 2-E-3,6-DMP (2-Ethyl-3,6-dimethylpyrazin), 2-E-3,5-DMP (2-Ethyl-3,5-dimethylpyrazin), Tetramethylpyrazin (2,3,5,6-Tetramethylpyrazin), 2,3-DE-5-MP (2,3-Diethyl-5-methylpyrazin), SBMOP (2-sec.-Butyl-3-methoxypyrazin) und Geosmin gekennzeichnet.

In einer bevorzugten Ausführungsform der vorliegenden Erfindung ist die Mutterlauge, insbesondere die erste, zweite und/oder weitere Mutterlauge durch einen Gehalt an mindestens einer freien α-Aminosäure, insbesondere Asparaginsäure (ASP, D), Glutaminsäure (GLU, E), Asparagin (ASN, N), Serin (SER, S), Glutamin (GLN, Q), Histidin (HIS, H), Glycin (GLY, G), Threonin (THR, T), Arginin (ARG, R), Alanin (ALA, A), Tyrosin (TYR, Y), Cystein (CYS, C), Valin (VAL, V), Methionin (MET, M), Tryptophan (TRP, W), Phenylalanin (PHE, F), Isoleucin (ILE, I), Leucin (LEU, L), Lysin (LYS, K) oder Prolin (PRO, P) gekennzeichnet.

In einer bevorzugten Ausführungsform der vorliegenden Erfindung ist die Mutterlauge, insbesondere die erste, zweite und/oder weitere Mutterlauge durch Gehalte an den freien α-Aminosäuren Asparaginsäure (ASP, D), Glutaminsäure (GLU, E), Asparagin (ASN, N), Serin (SER, S), Glutamin (GLN, Q), Histidin (HIS, H), Glycin (GLY, G), Threonin (THR, T), Arginin (ARG, R), Alanin (ALA, A), Tyrosin (TYR, Y), Cystein (CYS, C), Valin (VAL, V), Methionin (MET, M), Tryptophan (TRP, W), Phenylalanin (PHE, F), Isoleucin (ILE, I), Leucin (LEU, L), Lysin (LYS, K) und Prolin (PRO, P) gekennzeichnet.

In einer besonders bevorzugten Ausführungsform der vorliegenden Erfindung ist die Mutterlauge, insbesondere die erste, zweite und/oder weitere Mutterlauge, durch einen Gehalt an γ-Aminobuttersäure (GABA) gekennzeichnet.

In einer besonders bevorzugten Ausführungsform der vorliegenden Erfindung ist die Mutterlauge, insbesondere die erste, zweite und/oder weitere Mutterlauge durch eine Kombination der vorgenannten Produktparameter, insbesondere Aromengehalt, Gehalt an freien α-Aminosäuren und einen Gehalt an γ-Aminobuttersäure gekennzeichnet.

In einer bevorzugten Ausführungsform der vorliegenden Erfindung ist die Mutterlauge, insbesondere die erste, zweite und/oder weitere Mutterlauge durch zusätzliche Produktparameter insbesondere Farbe-in-Lösung, Trockensubstanz oder/und den Saccharose-Gehalt charakterisiert.

In einer weiteren bevorzugten Ausführungsform der vorliegenden Erfindung weist die Mutterlauge, insbesondere die erste, zweite und/oder weitere Mutterlauge, einen Gehalt an mindestens einem Aroma auf, nämlich 5 bis 200 µg/kg DMDS, 10 bis 100 µg/kg Pyrazin, 100 bis 300 µg/kg 2-MP, 1000 bis 3000 µg/kg 2,5-DMP, 5 bis 50 µg/kg 2-EP, 10 bis 400 µg/kg 2,3-DMP, 100 bis 1500 µg/kg 2,3,5-TMP, 10 bis 1100 µg/kg 2-E-3,6-DMP, 5 bis 200 µg/kg 2-E-3,5-DMP, 5 bis 100 µg/kg Tetramethylpyrazin, höchstens 0,3 µg/kg 2,3-DE-5-MP, 0,005 bis 0,3 µg/kg SBMOP oder 0,005 bis 0,5 µg/kg Geosmin (jeweils bezogen auf das Gesamtgewicht der Mutterlauge).

In einer weiteren bevorzugten Ausführungsform der vorliegenden Erfindung weist die Mutterlauge, insbesondere die erste, zweite und/oder weitere Mutterlauge, einen Gehalt an Aromen von 5 bis 200 µg/kg DMDS, 10 bis 100 µg/kg Pyrazin, 100 bis 300 µg/kg 2-MP, 1000 bis 3000 µg/kg 2,5-DMP, 5 bis 50 µg/kg 2-EP, 10 bis 400 µg/kg 2,3-DMP, 100 bis 1500 µg/kg 2,3,5-TMP, 10 bis 1100 µg/kg 2-E-3,6-DMP, 5 bis 200 µg/kg 2-E-3,5-DMP, 5 bis 100 µg/kg Tetramethylpyrazin, höchstens 0,3 µg/kg 2,3-DE-5-MP, 0,005 bis 0,3 µg/kg SBMOP und 0,005 bis 0,5 µg/kg Geosmin (jeweils bezogen auf das Gesamtgewicht der Mutterlauge) auf.

In einer besonders bevorzugten Ausführungsform der vorliegenden Erfindung weist die erste Mutterlauge einen Gehalt an mindestens einem Aroma auf, nämlich 5 bis 70 µg/kg DMDS, 10 bis 100 µg/kg Pyrazin, 100 bis 300 µg/kg 2-MP, 1000 bis 3000 µg/kg 2,5-DMP, 5 bis 40 µg/kg 2-EP, 10 bis 150 µg/kg 2,3-DMP, 100 bis 1000 µg/kg 2,3,5-TMP, 10 bis 500 µg/kg 2-E-3,6-DMP, 5 bis 150 µg/kg 2-E-3,5-DMP, 5 bis 75 µg/kg Tetramethylpyrazin, höchstens 0,3 µg/kg 2,3-DE-5-MP, 0,005 bis 0,3 µg/kg SBMOP oder 0,005 bis 0,3 µg/kg Geosmin (jeweils bezogen auf das Gesamtgewicht der Mutterlauge).

In einer besonders bevorzugten Ausführungsform der vorliegenden Erfindung weist die erste Mutterlauge einen Gehalt an Aromen von 5 bis 70 µg/kg DMDS, 10 bis 100 µg/kg Pyrazin, 100 bis 300 µg/kg 2-MP, 1000 bis 3000 µg/kg 2,5-DMP, 5 bis 40 µg/kg 2-EP, 10 bis 150 µg/kg 2,3-DMP, 100 bis 1000 µg/kg 2,3,5-TMP, 10 bis 500 µg/kg 2-E-3,6-DMP, 5 bis 150 µg/kg 2-E-3,5-DMP, 5 bis 75 µg/kg Tetramethylpyrazin, höchstens 0,3 µg/kg 2,3-DE-5-MP, 0,005 bis 0,3 µg/kg SBMOP und 0,005 bis 0,3 µg/kg Geosmin (jeweils bezogen auf das Gesamtgewicht der Mutterlauge) auf.

In einer besonders bevorzugten Ausführungsform der vorliegenden Erfindung weist die zweite Mutterlauge einen Gehalt an mindestens einem Aroma auf, nämlich 30 bis 200 µg/kg DMDS, 10 bis 100 µg/kg Pyrazin, 150 bis 300 µg/kg 2-MP, 1000 bis 3000 µg/kg 2,5-DMP, 15 bis 50 µg/kg 2-EP, 10 bis 400 µg/kg 2,3-DMP, 200 bis 1500 µg/kg 2,3,5-TMP, 50 bis 1100 µg/kg 2-E-3,6-DMP, 10 bis 200 µg/kg 2-E-3,5-DMP, 10 bis 100 µg/kg Tetramethylpyrazin, höchstens 0,3 µg/kg 2,3-DE-5-MP, 0,005 bis 0,3 µg/kg SBMOP oder 0,005 bis 0,5 µg/kg Geosmin (jeweils bezogen auf das Gesamtgewicht der Mutterlauge).

In einer besonders bevorzugten Ausführungsform der vorliegenden Erfindung weist die zweite Mutterlauge einen Gehalt an Aromen von 30 bis 200 µg/kg DMDS, 10 bis 100 µg/kg Pyrazin, 150 bis 300 µg/kg 2-MP, 1000 bis 3000 µg/kg 2,5-DMP, 15 bis 50 µg/kg 2-EP, 10 bis 400 µg/kg 2,3-DMP, 200 bis 1500 µg/kg 2,3,5-TMP, 50 bis 1100 µg/kg 2-E-3,6-DMP, 10 bis 200 µg/kg 2-E-3,5-DMP, 10 bis 100 µg/kg Tetramethylpyrazin, höchstens 0,3 µg/kg 2,3-DE-5-MP, 0,005 bis 0,3 µg/kg SBMOP und 0,005 bis 0,5 µg/kg Geosmin (jeweils bezogen auf das Gesamtgewicht der Mutterlauge) auf.

In einer weiteren bevorzugten Ausführungsform der vorliegenden Erfindung weist die Mutterlauge, insbesondere die erste, zweite und/oder weitere Mutterlauge einen Gehalt an mindestens einer α-Aminosäure auf, nämlich 500 bis 2000 mg/kg Asparaginsäure (ASP, D), 500 bis 2000 mg/kg Glutaminsäure (GLU, E), 100 bis 500 mg/kg Asparagin (ASN, N), 100 bis 1200 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 50 bis 2000 mg/kg Alanin (ALA, A), 100 bis 2500 mg/kg Tyrosin (TYR, Y), 0 bis 16 mg/kg Cystein (CYS, C), 10 bis 1000 mg/kg Valin (VAL, V), 0 bis 100 mg/kg Methionin (MET, M), 10 bis 500 mg/kg Tryptophan (TRP, W), 10 bis 500 mg/kg Phenylalanin (PHE, F), 100 bis 1500 mg/kg Isoleucin (ILE, I), 50 bis 1500 mg/kg Leucin (LEU, L), 10 bis 150 mg/kg Lysin (LYS, K) oder 100 bis 1000 mg/kg Prolin (PRO, P) (jeweils bezogen auf das Gesamtgewicht der Mutterlauge).

In einer weiteren bevorzugten Ausführungsform der vorliegenden Erfindung weist die Mutterlauge, insbesondere die erste, zweite und/oder weitere Mutterlauge(n), einen Gehalt an α-Aminosäuren auf, nämlich 500 bis 2000 mg/kg Asparaginsäure (ASP, D), 500 bis 2000 mg/kg Glutaminsäure (GLU, E), 100 bis 500 mg/kg Asparagin (ASN, N), 100 bis 1200 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 50 bis 2000 mg/kg Alanin (ALA, A), 100 bis 2500 mg/kg Tyrosin (TYR, Y), 0 bis 16 mg/kg Cystein (CYS, C), 10 bis 1000 mg/kg Valin (VAL, V), 0 bis 100 mg/kg Methionin (MET, M), 10 bis 500 mg/kg Tryptophan (TRP, W), 10 bis 500 mg/kg Phenylalanin (PHE, F), 100 bis 1500 mg/kg Isoleucin (ILE, I), 50 bis 1500 mg/kg Leucin (LEU, L), 10 bis 150 mg/kg Lysin (LYS, K) und 100 bis 1000 mg/kg Prolin (PRO, P) (jeweils bezogen auf das Gesamtgewicht der Mutterlauge).

In einer weiteren bevorzugten Ausführungsform der vorliegenden Erfindung weist die erste Mutterlauge einen Gehalt an mindestens einer α-Aminosäure auf, nämlich 500 bis 1500 mg/kg Asparaginsäure (ASP, D), 500 bis 1500 mg/kg Glutaminsäure (GLU, E), 100 bis 500 mg/kg Asparagin (ASN, N), 100 bis 1000 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 50 bis 1000 mg/kg Alanin (ALA, A), 100 bis 1500 mg/kg Tyrosin (TYR, Y), 0 bis 16 mg/kg Cystein (CYS, C), 10 bis 500 mg/kg Valin (VAL, V), 0 bis 50 mg/kg Methionin (MET, M), 10 bis 500 mg/kg Tryptophan (TRP, W), 10 bis 500 mg/kg Phenylalanin (PHE, F), 100 bis 1000 mg/kg Isoleucin (ILE, I), 50 bis 1000 mg/kg Leucin (LEU, L), 10 bis 150 mg/kg Lysin (LYS, K) oder 100 bis 1000 mg/kg Prolin (PRO, P) (jeweils bezogen auf das Gesamtgewicht der Mutterlauge).

In einer weiteren bevorzugten Ausführungsform der vorliegenden Erfindung weist die erste Mutterlauge einen Gehalt an α-Aminosäuren von 500 bis 1500 mg/kg Asparaginsäure (ASP, D), 500 bis 1500 mg/kg Glutaminsäure (GLU, E), 100 bis 500 mg/kg Asparagin (ASN, N), 100 bis 1000 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 50 bis 1000 mg/kg Alanin (ALA, A), 100 bis 1500 mg/kg Tyrosin (TYR, Y), 0 bis 16 mg/kg Cystein (CYS, C), 10 bis 500 mg/kg Valin (VAL, V), 0 bis 50 mg/kg Methionin (MET, M), 10 bis 500 mg/kg Tryptophan (TRP, W), 10 bis 500 mg/kg Phenylalanin (PHE, F), 100 bis 1000 mg/kg Isoleucin (ILE, I), 50 bis 1000 mg/kg Leucin (LEU, L), 10 bis 150 mg/kg Lysin (LYS, K) und 100 bis 1000 mg/kg Prolin (PRO, P) (jeweils bezogen auf das Gesamtgewicht der Mutterlauge) auf.

In einer weiteren bevorzugten Ausführungsform der vorliegenden Erfindung weist die zweite Mutterlauge einen Gehalt an mindestens einer α-Aminosäure auf, nämlich 1000 bis 2000 mg/kg Asparaginsäure (ASP, D), 1000 bis 2000 mg/kg Glutaminsäure (GLU, E), 100 bis 500 mg/kg Asparagin (ASN, N), 300 bis 1200 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 500 bis 2000 mg/kg Alanin (ALA, A), 1000 bis 2500 mg/kg Tyrosin (TYR, Y), 0 bis 16 mg/kg Cystein (CYS, C), 100 bis 1000 mg/kg Valin (VAL, V), 10 bis 100 mg/kg Methionin (MET, M), 10 bis 500 mg/kg Tryptophan (TRP, W), 10 bis 500 mg/kg Phenylalanin (PHE, F), 250 bis 1500 mg/kg Isoleucin (ILE, I), 100 bis 1500 mg/kg Leucin (LEU, L), 10 bis 150 mg/kg Lysin (LYS, K) oder 100 bis 1000 mg/kg Prolin (PRO, P) (jeweils bezogen auf das Gesamtgewicht der Mutterlauge).

In einer weiteren bevorzugten Ausführungsform der vorliegenden Erfindung weist die zweite Mutterlauge einen Gehalt an α-Aminosäuren von 1000 bis 2000 mg/kg Asparaginsäure (ASP, D), 1000 bis 2000 mg/kg Glutaminsäure (GLU, E), 100 bis 500 mg/kg Asparagin (ASN, N), 300 bis 1200 mg/kg Serin (SER, S), 0 bis 16 mg/kg Glutamin (GLN, Q), 0 bis 16 mg/kg Histidin (HIS, H), 100 bis 1000 mg/kg Glycin (GLY, G), 100 bis 500 mg/kg Threonin (THR, T), 10 bis 100 mg/kg Arginin (ARG, R), 500 bis 2000 mg/kg Alanin (ALA, A), 1000 bis 2500 mg/kg Tyrosin (TYR, Y), 0 bis 16 mg/kg Cystein (CYS, C), 100 bis 1000 mg/kg Valin (VAL, V), 10 bis 100 mg/kg Methionin (MET, M), 10 bis 500 mg/kg Tryptophan (TRP, W), 10 bis 500 mg/kg Phenylalanin (PHE, F), 250 bis 1500 mg/kg Isoleucin (ILE, I), 100 bis 1500 mg/kg Leucin (LEU, L), 10 bis 150 mg/kg Lysin (LYS, K) und 100 bis 1000 mg/kg Prolin (PRO, P) (jeweils bezogen auf das Gesamtgewicht der Mutterlauge) auf.

In einer weiteren bevorzugten Ausführungsform der vorliegenden Erfindung weist die Mutterlauge, insbesondere die erste, zweite und/oder weitere Mutterlauge, einen Gehalt an 100 bis 2000 mg/kg γ-Aminobuttersäure (bezogen auf das Gesamtgewicht der Mutterlauge) auf.

In einer weiteren bevorzugten Ausführungsform der vorliegenden Erfindung weist die erste Mutterlauge einen Gehalt an 100 bis 1200 mg/kg γ-Aminobuttersäure (bezogen auf das Gesamtgewicht der Mutterlauge) auf.

In einer weiteren bevorzugten Ausführungsform der vorliegenden Erfindung weist die zweite Mutterlauge einen Gehalt an 1000 bis 2000 mg/kg γ-Aminobuttersäure (bezogen auf das Gesamtgewicht der Mutterlauge) auf.

In einer weiteren bevorzugten Ausführungsform der vorliegenden Erfindung weist die Mutterlauge, insbesondere die erste, zweite und/oder weitere Mutterlauge(n), eine Farbe-in-Lösung von 5000 bis 30000 ICUMSA-Einheiten [IE], einen Trockensubstanzgehalt von 75 bis 84 Gew.-% und einen Saccharose-Gehalt von 64 bis 74 Gew.-% (jeweils bezogen auf das Gesamtgewicht der Mutterlauge) auf.

In einer weiteren bevorzugten Ausführungsform der vorliegenden Erfindung weist die erste Mutterlauge eine Farbe-in-Lösung von 5000 bis 10000 ICUMSA-Einheiten [IE], einen Trockensubstanzgehalt von 75 bis 82 Gew.-% und einen Saccharose-Gehalt von 66 bis 74 Gew.-% (jeweils bezogen auf das Gesamtgewicht der Mutterlauge) auf.

In einer besonders bevorzugten Ausführungsform der vorliegenden Erfindung weist die zweite Mutterlauge eine Farbe-in-Lösung von 10000 bis 30000 ICUMSA-Einheiten [IE], einen Trockensubstanzgehalt von 77 bis 84 Gew.-% und einen Saccharose-Gehalt von 64 bis 72 Gew.-% (jeweils bezogen auf das Gesamtgewicht der Mutterlauge) auf.

Die Farbe-in-Lösung beider Mutterlaugen wurde nach folgender Methode bestimmt: Analytische Betriebskontrolle der Zuckerindustrie, B.2.4.1.7., S.6-7, Hrsgb. Verein der Zuckerindustrie, Verlag Dr. Albert Bartens, Berlin 1978.

In einer besonders bevorzugten Ausführungsform der vorliegenden Erfindung ist ein Verfahren umfassend die Verfahrensschritte a), b), c), d) und e) vorgesehen zum Erhalt einer ersten Magmapräparation, enthaltend eine erste Saccharosekristallfraktion und eine erste Mutterlauge, wobei im Anschluss ein Verfahren gemäß der Verfahrensschritte f) und g) durchgeführt wird, und wobei nach Verfahrensschritt f) und vor Verfahrensschritt g) ein Verfahrensschritt x) durchgeführt wird.

In einer besonders bevorzugten Ausführungsform der vorliegenden Erfindung ist ein Verfahren umfassend die Verfahrensschritte a), b), c), d) und e) vorgesehen zum Erhalt einer ersten Magmapräparation, enthaltend eine erste Saccharosekristallfraktion und eine erste Mutterlauge, wobei im Anschluss ein Verfahren gemäß der Verfahrensschritte f) und g) durchgeführt wird, wobei nach Verfahrensschritt f) und vor Verfahrensschritt g) kein anderer Verfahrensschritt durchgeführt wird, insbesondere keine Abtrennung von Mutterlauge von der Saccharosekristallfraktion, zum Beispiel durch Zentrifugation und/oder Filtration, und keine Saccharosekristallisation durchgeführt wird.

In einer besonders bevorzugten Ausführungsform der vorliegenden Erfindung ist ein Verfahren umfassend die Verfahrensschritte a), b), c), d) und e) vorgesehen zum Erhalt einer ersten Magmapräparation, enthaltend eine erste Saccharosekristallfraktion und eine erste Mutterlauge, wobei im Anschluss ein Verfahren gemäß der Verfahrensschritte f) und g) durchgeführt wird, und wobei nach Verfahrensschritt f) und vor Verfahrensschritt g) ein Verfahrensschritt x), aber kein anderer Verfahrensschritt durchgeführt wird, insbesondere keine Abtrennung von Mutterlauge von der Saccharosekristallfraktion, zum Beispiel durch Zentrifugation und/oder Filtration, und keine Saccharosekristallisation durchgeführt wird.

In einer besonders bevorzugten Ausführungsform ist vorgesehen, ein Verfahren bereitzustellen, umfassend die Verfahrensschritte a), b), c), d) und e) zum Erhalt einer ersten Magmapräparation enthaltend eine erste Saccharosekristallfraktion und eine erste Mutterlauge und anschließendes Durchführen der Verfahrensschritte f) und g), wobei in bevorzugter Ausführungsform Verfahrensschritt f) in Form von Verfahrensschritt f1) durchgeführt wird.

In einer weiteren bevorzugten Ausführungsform der vorliegenden Erfindung ist ein Verfahren vorgesehen, umfassend die Verfahrensschritte a) bis e) und anschließend f) und g), wobei Verfahrensschritt f) in Form der Verfahrensschritte f2) und f3) durchgeführt wird.

In einer weiteren bevorzugten Ausführungsform der vorliegenden Erfindung ist ein Verfahren vorgesehen, umfassend die Verfahrensschritt a) bis e) und anschließend f) und g), wobei Verfahrensschritt f) in Form der Verfahrensschritte f2) und f3) durchgeführt wird, und wobei in Verfahrensschritt f2) die erste Mutterlauge vollständig von der ersten Saccharosekristallfraktion abgetrennt wird und in Verfahrensschritt f3) eine andere, insbesondere eine zweite, Mutterlauge hinzugegeben wird.

In einer besonders bevorzugten Ausführungsform sieht die vorliegende Erfindung vor, dass in einem Verfahrensschritt x) vor dem Durchführen von Verfahrensschritt g) zu der in Verfahrensschritt f) erhaltenen Magmapräparation enthaltend 76 bis 98 Gew.-% Saccharosekristallfraktion und 2 bis 24 Gew.-% Mutterlauge (jeweils bezogen auf das Gesamtgewicht der Magmapräparation) Puderzucker hinzugegeben wird, und, in bevorzugter Ausführungsform, anschließend in der Magmapräparation homogenisiert wird.

In besonders bevorzugter Ausführungsform wird der Puderzucker in Verfahrensschritt x) in einer Menge von 1 bis 25 Gew.-%, insbesondere 5 bis 20 Gew.-%, insbesondere 7 bis 15 Gew.-% und insbesondere 8 bis 10 Gew.-% ((jeweils bezogen auf das Gesamtgewicht der nach Zugabe des Puderzuckers erhaltenen Magmapräparation) zugegeben und anschließend homogenisiert.

In einer besonders bevorzugten Ausführungsform sieht die vorliegende Erfindung also vor, dass in Verfahrensschritt x) nach Zugabe des Puderzuckers auch ein Homogenisieren des Puderzuckers in der Magmapräparation stattfindet.

In bevorzugter Ausführungsform kann die Zugabe des Puderzuckers unter atmosphärischem Druck, unter reduziertem Druck, beispielsweise 10 bis 900 mbar, insbesondere 600 bis 800 mbar, insbesondere 650 bis 750 mbar, insbesondere 700 mbar, oder unter erhöhtem Druck durchgeführt werden.

Die erfindungsgemäß besonders bevorzugte Zugabe von Puderzucker in Verfahrensschritt x) führt nach Durchführen des Trocknungsschrittes g) überrascherweise zu einer besonders lagerstabilen Rohzuckerpräparation. Die Zugabe des Puderzuckers in Verfahrensschritt x) kann unter atmosphärischem Druck, unter reduziertem Druck oder unter erhöhtem Druck stattfinden.

In besonders bevorzugter Ausführungsform weist der Puderzucker einen Anteil von Saccharosekristallen mit einem Durchmesser von kleiner oder gleich 32 µm von mindestens 70 Gewichts-% auf.

In einer besonders bevorzugten Ausführungsform der vorliegenden Erfindung wird das Trocknen gemäß Verfahrensschritt g) mittels Heißluft, insbesondere Luft mit einer Temperatur von mindestens 30 °C, insbesondere 30 bis 180 °C, insbesondere 35 bis 160 °C, insbesondere 45 bis 100 °C, insbesondere 35 bis 60°C, insbesondere 40 bis 60 °C, insbesondere 50 bis 60 °C oder unter reduziertem Druck, insbesondere einem Druck von 10 bis 900, insbesondere 20 bis 600, insbesondere 30 bis 400 mbar, insbesondere 40 bis 200 mbar, insbesondere 50 bis 100 mbar, durchgeführt.

In einer besonders bevorzugten Ausführungsform wird das Trocknen gemäß Verfahrensschritt g) bei einem Druck von 900 bis 1100 mbar durchgeführt. In einer besonders bevorzugten Ausführungsform wird das Trocknen gemäß Verfahrensschritt g) bei atmosphärischem Druck durchgeführt.

In bevorzugter Ausführungsform wird das Trocknen gemäß Verfahrensschritt g) mittels Heißluft durchgeführt, insbesondere bei atmosphärischem Druck.

In einer besonders bevorzugten Ausführungsform der vorliegenden Erfindung wird das Trocknen gemäß Verfahrensschritt g) unter reduziertem Druck, insbesondere einem Druck von 10 bis 900, insbesondere 20 bis 600, insbesondere 30 bis 400 mbar, insbesondere 40 bis 200 mbar, insbesondere 50 bis 100 mbar durchgeführt.

In einer besonders bevorzugten Ausführungsform der vorliegenden Erfindung wird das Trocknen gemäß Verfahrensschritt g) bei einer Temperatur des Produktes von 20 bis 60 °C, insbesondere 30 bis 60 °C, insbesondere 35 bis 60 °C, insbesondere 40 bis 60 °C, insbesondere 50 bis 60 °C durchgeführt. In einer besonders bevorzugten Ausführungsform wird das Trocknen gemäß Verfahrensschritt g) bei einer Temperatur des Produktes von 50 bis 60 °C durchgeführt.

In einer besonders bevorzugten Ausführungsform der vorliegenden Erfindung wird das Trocknen gemäß Verfahrensschritt g) in einem Trockenbett durchgeführt.

In einer weiteren bevorzugten Ausführungsform der vorliegenden Erfindung weist die getrocknete Rohzuckerpräparation, hergestellt aus 76 bis 98 Gew.-% erster Saccharosekristallfraktion und 2 bis 24 Gew.-% erster Mutterlauge (jeweils bezogen auf das Gesamtgewicht der Magmapräparation), eine Farbe-in-Lösung von 200 bis 1100 ICUMSA-Einheiten [IE], einen Trockensubstanzgehalt von 99,4 bis 99,9 Gew.-% und einen Saccharose-Gehalt von 92,0 bis 99,6 Gew.-% (jeweils bezogen auf die Gesamtgewicht der getrockneten Rohzuckerpräparation) auf.

In einer weiteren bevorzugten Ausführungsform der vorliegenden Erfindung weist die getrocknete Rohzuckerpräparation, hergestellt aus 76 bis 98 Gew.-% erster Saccharosekristallfraktion und 2 bis 24 Gew.-% zweiter Mutterlauge (jeweils bezogen auf das Gesamtgewicht der Magmapräparation), eine Farbe-in-Lösung von 700 bis 3000 ICUMSA-Einheiten [IE], einen Trockensubstanzgehalt von 99,4 bis 99,9 Gew.-% und einen Saccharose-Gehalt von 92,0 bis 99,6 Gew.-% (jeweils bezogen auf das Gesamtgewicht der getrockneten Rohzuckerpräparation) auf.

Die Farbe-in-Lösung der getrockneten Rohzuckerpräparate wurde nach folgender Methode bestimmt: ICUMSA Method GS9/1/2/3-8 (2011), The Determination of Sugar Solution Colour at pH 7.0 by MOPS Buffer Method - Official (Reference) Method.

Eine erfindungsgemäße Rohzuckerpräparation zeichnet sich durch einen angenehmen, guten Geschmack und Geruch, insbesondere einen karamellartigen, insbesondere karamell-nussartigen Geruch und/oder Geschmack aus.

In einer weiteren bevorzugten Ausführungsform der vorliegenden Erfindung ist die mittels eines der erfindungsgemäßen Verfahren hergestellte Rohzuckerpräparation, gekennzeichnet durch einen Gehalt an mindestens einem Aroma, nämlich mindestens 0,2 µg/kg, insbesondere mindestens 0,25 µg/kg, insbesondere mindestens 0,3 µg/kg, DMDS (Dimethyldisulfid), mindestens 0,5 µg/kg, insbesondere mindestens 0,6 µg/kg, insbesondere mindestens 0,7 µg/kg, Pyrazin, mindestens 1,0 µg/kg, insbesondere mindestens 1,6 µg/kg, insbesondere mindestens 2,5 µg/kg, 2-MP (2-Methylpyrazin), mindestens 5,0 µg/kg, insbesondere mindestens 15 µg/kg, insbesondere mindestens 20 µg/kg, 2,5-DMP (2,5-Dimethylpyrazin), mindestens 0,1 µg/kg, insbesondere mindestens 0,15 µg/kg, insbesondere mindestens 0,2 µg/kg, 2-EP (2-Ethylpyrazin), mindestens 0,3 µg/kg, insbesondere mindestens 0,4 µg/kg, insbesondere mindestens 0,5 µg/kg, 2,3-DMP (2,3-Dimethylpyrazin), mindestens 2,0 µg/kg, insbesondere mindestens 3,0 µg/kg, insbesondere mindestens 4,7 µg/kg, 2,3,5-TMP (2,3,5-Trimethylpyrazin), mindestens 0,4 µg/kg, insbesondere mindestens 0,5 µg/kg, insbesondere mindestens 1,0 µg/kg, 2-E-3,6-DMP (2-Ethyl-3,6-dimethylpyrazin), mindestens 0,2 µg/kg, insbesondere mindestens 0,3 µg/kg, insbesondere mindestens 0,4 µg/kg, 2-E-3,5-DMP (2-Ethyl-3,5-dimethylpyrazin), mindestens 0,25 µg/kg, insbesondere mindestens 0,3 µg/kg, insbesondere mindestens 0,6 µg/kg, Tetramethylpyrazin (2, 3, 5, 6-Tetramethylpyrazin), mindestens 0,01 µg/kg, insbesondere mindestens 0,02 µg/kg, insbesondere mindestens 0,03 µg/kg, 2,3-DE-5-MP (2,3-Diethyl-5-Methylpyrazin), mindestens 0,0005 µg/kg, insbesondere mindestens 0,001 µg/kg, insbesondere mindestens 0,003 µg/kg, SBMOP (2-sec.Butyl-3-Methoxypyrazin) oder mindestens 0,01 µg/kg, insbesondere mindestens 0,02 µg/kg, insbesondere mindestens 0,029 µg/kg, Geosmin (jeweils bezogen auf das Gesamtgewicht der getrockneten Rohzuckerpräparation).

In einer weiteren bevorzugten Ausführungsform der vorliegenden Erfindung die mittels eines der erfindungsgemäßen Verfahren hergestellte Rohzuckerpräparation, gekennzeichnet durch einen Gehalt an Aromen umfassend mindestens 0,2 µg/kg, insbesondere mindestens 0,25 µg/kg, insbesondere mindestens 0,3 µg/kg, DMDS (Dimethyldisulfid), mindestens 0,5 µg/kg, insbesondere mindestens 0,6 µg/kg, insbesondere mindestens 0,7 µg/kg, Pyrazin, mindestens 1,0 µg/kg, insbesondere mindestens 1,6 µg/kg, insbesondere mindestens 2,5 µg/kg, 2-MP (2-Methylpyrazin), mindestens 5,0 µg/kg, insbesondere mindestens 15 µg/kg, insbesondere mindestens 20 µg/kg, 2,5-DMP (2,5-Dimethylpyrazin), mindestens 0,1 µg/kg, insbesondere mindestens 0,15 µg/kg, insbesondere mindestens 0,2 µg/kg 2-EP (2-Ethylpyrazin), mindestens 0,3 µg/kg, insbesondere mindestens 0,4 µg/kg, insbesondere mindestens 0,5 µg/kg, 2,3-DMP (2,3-Dimethylpyrazin), mindestens 2,0 µg/kg, insbesondere mindestens 3,0 µg/kg, insbesondere mindestens 4,7 µg/kg, 2,3,5-TMP (2,3,5-Trimethylpyrazin), mindestens 0,4 µg/kg, insbesondere mindestens 0,7 µg/kg, insbesondere mindestens 1,0 µg/kg, 2-E-3,6-DMP (2-Ethyl-3,6-dimethylpyrazin), mindestens 0,2 µg/kg, insbesondere mindestens 0,3 µg/kg, insbesondere mindestens 0,4 µg/kg, 2-E-3,5-DMP (2-Ethyl-3,5-dimethylpyrazin), mindestens 0,25 µg/kg, insbesondere mindestens 0,3 µg/kg, insbesondere mindestens 0,6 µg/kg, Tetramethylpyrazin (2, 3, 5, 6-Tetramethylpyrazin), mindestens 0,01 µg/kg, insbesondere mindestens 0,02 µg/kg, insbesondere mindestens 0,03 µg/kg 2,3-DE-5-MP (2,3-Diethyl-5-Methylpyrazin), mindestens 0,0005 µg/kg, insbesondere mindestens 0,001 µg/kg, insbesondere mindestens 0,003 µg/kg, SBMOP (2-sec.Butyl-3-Methoxypyrazin) und mindestens 0,01 µg/kg, insbesondere mindestens 0,02 µg/kg, insbesondere mindestens 0,029 µg/kg, Geosmin (jeweils bezogen auf das Gesamtgewicht der getrockneten Rohzuckerpräparation).

Insbesondere ist die mittels eines der erfindungsgemäßen Verfahren hergestellte Rohzuckerpräparation, gekennzeichnet durch einen Gehalt an mindestens einem Aroma, nämlich 0,2 bis 10 µg/kg, insbesondere 0,3 bis 10 µg/kg, insbesondere 0,3 bis 8,5 µg/kg, DMDS (Dimethyldisulfid), 0,5 bis 10 µg/kg, insbesondere 0,7 bis 10 µg/kg, insbesondere 0,7 bis 3,9 µg/kg, Pyrazin, 1,0 bis 50 µg/kg, insbesondere 1,6 bis 50 µg/kg, insbesondere 1,6 bis 16 µg/kg, 2-MP (2-Methylpyrazin), 5,0 bis 300 µg/kg, insbesondere 15 bis 300 µg/kg, insbesondere 15 bis 207 µg/kg, 2,5-DMP (2,5-Dimethylpyrazin), 0,1 bis 5 µg/kg, insbesondere 0,2 bis 5 µg/kg, insbesondere 0,1 bis 1,0 µg/kg, 2-EP (2-Ethylpyrazin), 0,3 bis 30 µg/kg, insbesondere 0,5 bis 30 µg/kg, insbesondere 0,5 bis 8,0 µg/kg, 2,3-DMP (2,3-Dimethylpyrazin), 2,0 bis 150 µg/kg, insbesondere 4,7 bis 150 µg/kg, insbesondere 4,7 bis 61 µg/kg, 2,3,5-TMP (2,3,5-Trimethylpyrazin), 0,4 bis 20 µg/kg, insbesondere 1,0 bis 20 µg/kg, insbesondere 0,49 bis 6,1 µg/kg, 2-E-3,6-DMP (2-Ethyl-3,6-dimethylpyrazin), 0,2 bis 10 µg/kg, insbesondere 0,4 bis 10 µg/kg, insbesondere 0,34 bis 3,0 µg/kg, 2-E-3,5-DMP (2-Ethyl-3,5-dimethylpyrazin), 0,25 bis 10 µg/kg, insbesondere 0,6 bis 10 µg/kg, insbesondere 0,29 bis 7,0 µg/kg, Tetramethylpyrazin (2, 3, 5, 6-Tetramethylpyrazin), 0,01 µg/kg bis 1,0 µg/kg, insbesondere 0,03 bis 1,0 µg/kg, insbesondere 0,03 µg/kg bis 0,28 µg/kg, 2,3-DE-5-MP (2,3-Diethyl-5-Methylpyrazin), 0,0005 µg/kg bis 0,05 µg/kg, insbesondere 0,0005 µg/kg bis 0,05 µg/kg, insbesondere 0,003 bis 0,05 µg/kg, SBMOP (2-sec.Butyl-3-Methoxypyrazin) oder 0,01 bis 0,15 µg/kg, insbesondere 0,029 bis 0,15 µg/kg, insbesondere 0,012 bis 0,10 µg/kg, Geosmin (jeweils bezogen auf das Gesamtgewicht der getrockneten Rohzuckerpräparation).

Insbesondere ist die mittels eines der erfindungsgemäßen Verfahren hergestellte Rohzuckerpräparation, gekennzeichnet durch einen Gehalt an Aromen umfassend 0,2 bis 10 µg/kg, insbesondere 0,3 bis 10 µg/kg, insbesondere 0,3 bis 8,5 µg/kg, DMDS (Dimethyldisulfid), 0,5 bis 10 µg/kg, insbesondere 0,7 bis 10 µg/kg, insbesondere 0,7 bis 3,9 µg/kg, Pyrazin, 1,0 bis 50 µg/kg, insbesondere 1,6 bis 50 µg/kg, insbesondere 1,6 bis 16 µg/kg, 2-MP (2-Methylpyrazin), 5,0 bis 300 µg/kg, insbesondere 15 bis 300 µg/kg, insbesondere 15 bis 207 µg/kg, 2,5-DMP (2,5-Dimethylpyrazin), 0,1 bis 5 µg/kg, insbesondere 0,2 bis 5 µg/kg, insbesondere 0,1 bis 1,0 µg/kg, 2-EP (2-Ethylpyrazin), 0,2 bis 30 µg/kg, insbesondere 0,5 bis 30 µg/kg, insbesondere 0,5 bis 8,0 µg/kg, 2,3-DMP (2,3-Dimethylpyrazin), 2,0 bis 150 µg/kg, insbesondere 4,7 bis 150 µg/kg, insbesondere 4,7 bis 61 µg/kg, 2,3,5-TMP (2,3,5-Trimethylpyrazin), 0,4 bis 20 µg/kg, insbesondere 1,0 bis 20 µg/kg, insbesondere 0,49 bis 6,1 µg/kg, 2-E-3,6-DMP (2-Ethyl-3,6-dimethylpyrazin), 0,2 bis 10 µg/kg, insbesondere 0,4 bis 10 µg/kg, insbesondere 0,34 bis 3,0 µg/kg, 2-E-3,5-DMP (2-Ethyl-3,5-dimethylpyrazin), 0,25 bis 10 µg/kg, insbesondere 0,6 bis 10 µg/kg, insbesondere 0,29 bis 7,0 µg/kg, Tetramethylpyrazin (2, 3, 5, 6-Tetramethylpyrazin), 0,01 µg/kg bis 1,0 µg/kg, insbesondere 0,03 bis 1,0 µg/kg, 2,3-DE-5-MP, insbesondere 0,03 µg/kg bis 0,28µg/kg, (2,3-Diethyl-5-Methylpyrazin), 0,0005 µg/kg bis 0,05µg/kg, insbesondere 0,001 µg/kg bis 0,05µg/kg, insbesondere 0,003 bis 0,05 µg/kg, SBMOP (2-sec.Butyl-3-Methoxypyrazin) und 0,01 bis 0,15 µg/kg, insbesondere 0,029 bis 0,15 µg/kg, insbesondere 0,012 bis 0,10 µg/kg, Geosmin (jeweils bezogen auf das Gesamtgewicht der getrockneten Rohzuckerpräparation).

In einer besonders bevorzugten Ausführungsform der vorliegenden Erfindung weist die getrocknete Rohzuckerpräparation einen Saccharose-Gehalt von 90 bis 99,9 Gew.-%, insbesondere 92,0 bis 99,6 Gew.-%, insbesondere 97 bis 99,6 Gew.% (jeweils bezogen auf das Gesamtgewicht der getrockneten Rohzuckerpräparation) auf.

Eine derartige Rohzuckerpräparation zeichnet sich insbesondere durch einen besonders vorteilhaften Geruch und Geschmack, insbesondere einen nussig-karamelligen Geruch und hohe Naturbelassenheit aus.

In einer bevorzugten Ausführungsform beträgt der Wassergehalt einer erfindungsgemäßen getrockneten Rohzuckerpräparation höchstens 0,6 Gew.-%, insbesondere höchstens 0,5 Gew.-% (jeweils bezogen auf das Gesamtgewicht der getrockneten Rohzuckerpräparation).

In einer besonders bevorzugten Ausführungsform beträgt der Wassergehalt einer erfindungsgemäßen getrockneten Rohzuckerpräparation 0,1 bis 0,6 Gew.-%, insbesondere 0,2 bis 0,6 Gew.-%, insbesondere 0,2 bis 0,5 Gew.-% (jeweils bezogen auf das Gesamtgewicht der getrockneten Rohzuckerpräparation).

In einer bevorzugten Ausführungsform beträgt der α-Amino-Stickstoff-Gehalt einer erfindungsgemäßen getrockneten Rohzuckerpräparation mindestens 20 mg/kg, insbesondere mindestens 40 mg/kg, insbesondere mindestens 66 mg/kg (bezogen auf das Gesamtgewicht der getrockneten Rohzuckerpräparation).

In einer bevorzugten Ausführungsform beträgt der α-Amino-Stickstoff-Gehalt einer erfindungsgemäßen getrockneten Rohzuckerpräparation 20 bis 150 mg/kg, insbesondere 66 bis 150 mg/kg, insbesondere 60 bis 120 mg/kg (bezogen auf das Gesamtgewicht der getrockneten Rohzuckerpräparation).

In einer besonders bevorzugten Ausführungsform beträgt der α-Amino-Stickstoff-Gehalt einer erfindungsgemäßen getrockneten Rohzuckerpräparation mindestens 50 mg/kg (bezogen auf das Gesamtgewicht der getrockneten Rohzuckerpräparation).

In einer ganz besonders bevorzugten Ausführungsform beträgt der α-Amino-Stickstoff-Gehalt einer erfindungsgemäßen getrockneten Rohzuckerpräparation 50 bis 150 mg/kg (bezogen auf das Gesamtgewicht der getrockneten Rohzuckerpräparation).

In einer weiteren bevorzugten Ausführungsform der vorliegenden Erfindung ist die mittels eines der erfindungsgemäßen Verfahren hergestellte Rohzuckerpräparation, gekennzeichnet durch einen Gehalt an mindestens einer freien α-Aminosäure, umfassend, insbesondere bestehend aus, 10 bis 300 mg/kg, insbesondere 50 bis 300 mg/kg, insbesondere 105 bis 195 mg/kg, Asparaginsäure (ASP, D), 10 bis 250, insbesondere 50 bis 250 mg/kg, insbesondere 98 bis 177 mg/kg, mg/kg Glutaminsäure (GLU, E), 0 bis 70 mg/kg, insbesondere 15 bis 70 mg/kg, insbesondere 24 bis 41 mg/kg, Asparagin (ASN, N), 5 bis 110 mg/kg, insbesondere 20 bis 110 mg/kg, insbesondere 34 bis 71 mg/kg, Serin (SER, S), 0 bis 5, insbesondere 1 bis 5 mg/kg, insbesondere 2 bis 4 mg/kg, mg/kg Glutamin (GLN, Q), 0 bis 5, insbesondere 1 bis 5 mg/kg, insbesondere 2 bis 4 mg/kg, mg/kg Histidin (HIS, H), 5 bis 110 mg/kg, insbesondere 15 bis 110 mg/kg, insbesondere 21 bis 36 mg/kg, Glycin (GLY, G), 0 bis 50 mg/kg, insbesondere 5 bis 50 mg/kg, insbesondere 14 bis 23 mg/kg, Threonin (THR, T), 0 bis 30 mg/kg, insbesondere 1 bis 30 mg/kg, insbesondere 2 bis 6 mg/kg, Arginin (ARG, R), 5 bis 140 mg/kg, insbesondere 30 bis 140 mg/kg, insbesondere 52 bis 94 mg/kg, Alanin (ALA, A), 15 bis 300 mg/kg, insbesondere 75 bis 300 mg/kg, insbesondere 119 bis 213 mg/kg, Tyrosin (TYR, Y), 0 bis 10 mg/kg, insbesondere 1 bis 10 mg/kg, insbesondere 2 bis 4 mg/kg, Cystein (CYS, C), 0 bis 100 mg/kg, insbesondere 10 bis 100 mg/kg, insbesondere 28 bis 51 mg/kg, Valin (VAL, V), 0 bis 5 mg/kg, insbesondere 1 bis 5 mg/kg, insbesondere 2 bis 4 mg/kg, Methionin (MET, M), 0 bis 60 mg/kg, insbesondere 7 bis 60 mg/kg, insbesondere 15 bis 27 mg/kg, Tryptophan (TRP, W), 0 bis 40 mg/kg, insbesondere 4 bis 40 mg/kg, insbesondere 8 bis 13 mg/kg, Phenylalanin (PHE, F), 5 bis 150 mg/kg, insbesondere 25 bis 150 mg/kg, insbesondere 54 bis 99 mg/kg, Isoleucin (ILE, I), 5 bis 100 mg/kg, insbesondere 20 bis 100 mg/kg, insbesondere 36 bis 66 mg/kg, Leucin (LEU, L), 0 bis 15 mg/kg, insbesondere 1 bis 15 mg/kg, insbesondere 2 bis 4 mg/kg, Lysin (LYS, K) oder 0 bis 90, insbesondere 10 bis 90 mg/kg, insbesondere 19 bis 32 mg/kg, mg/kg Prolin (PRO, P) (jeweils bezogen auf das Gesamtgewicht der getrockneten Rohzuckerpräparation).

In einer weiteren bevorzugten Ausführungsform der vorliegenden Erfindung ist die mittels eines der erfindungsgemäßen Verfahren hergestellte Rohzuckerpräparation, gekennzeichnet durch Gehalte an freien α-Aminosäuren, umfassend, insbesondere bestehend aus 10 bis 300 mg/kg, insbesondere 50 bis 300 mg/kg, insbesondere 105 bis 195 mg/kg, Asparaginsäure (ASP, D), 10 bis 250 mg/kg, insbesondere 50 bis 250 mg/kg, insbesondere 98 bis 177 mg/kg, Glutaminsäure (GLU, E), 0 bis 70 mg/kg, insbesondere 15 bis 70 mg/kg, insbesondere 24 bis 41 mg/kg, Asparagin (ASN, N), 5 bis 110 mg/kg, insbesondere 20 bis 110 mg/kg, insbesondere 34 bis 71 mg/kg, Serin (SER, S), 0 bis 5 mg/kg, insbesondere 1 bis 5 mg/kg, insbesondere 2 bis 4 mg/kg, Glutamin (GLN, Q), 0 bis 5 mg/kg, insbesondere 1 bis 5 mg/kg, insbesondere 2 bis 4 mg/kg, Histidin (HIS, H), 5 bis 110 mg/kg, insbesondere 15 bis 110 mg/kg, insbesondere 21 bis 36 mg/kg, Glycin (GLY, G), 0 bis 50 mg/kg, insbesondere 5 bis 50 mg/kg, insbesondere 14 bis 23 mg/kg, Threonin (THR, T), 0 bis 30 mg/kg, insbesondere 1 bis 30 mg/kg, insbesondere 2 bis 6 mg/kg, Arginin (ARG, R), 5 bis 140 mg/kg, insbesondere 30 bis 140 mg/kg, insbesondere 52 bis 94 mg/kg, Alanin (ALA, A), 15 bis 300 mg/kg, insbesondere 75 bis 300 mg/kg, insbesondere 119 bis 213 mg/kg, Tyrosin (TYR, Y), 0 bis 10 mg/kg, insbesondere 1 bis 10 mg/kg, insbesondere 2 bis 4 mg/kg, Cystein (CYS, C), 0 bis 100 mg/kg, insbesondere 10 bis 100 mg/kg, insbesondere 28 bis 51 mg/kg, Valin (VAL, V), 0 bis 5 mg/kg, insbesondere 1 bis 5 mg/kg, insbesondere 2 bis 4 mg/kg, Methionin (MET, M), 0 bis 60 mg/kg, insbesondere 7 bis 60 mg/kg, insbesondere 15 bis 27 mg/kg, Tryptophan (TRP, W), 0 bis 40 mg/kg, insbesondere 4 bis 40 mg/kg, insbesondere 8 bis 13 mg/kg, Phenylalanin (PHE, F), 5 bis 150 mg/kg, insbesondere 25 bis 150 mg/kg, insbesondere 54 bis 99 mg/kg, Isoleucin (ILE, I), 5 bis 100 mg/kg, insbesondere 20 bis 100 mg/kg, insbesondere 36 bis 66 mg/kg, Leucin (LEU, L), 0 bis 15 mg/kg, insbesondere 1 bis 15 mg/kg, insbesondere 2 bis 4 mg/kg, Lysin (LYS, K) und 0 bis 90 mg/kg, insbesondere 10 bis 90 mg/kg, insbesondere 19 bis 32 mg/kg, Prolin (PRO, P) (jeweils bezogen auf das Gesamtgewicht der getrockneten Rohzuckerpräparation).

In einer weiteren bevorzugten Ausführungsform der vorliegenden Erfindung ist die mittels eines der erfindungsgemäßen Verfahren hergestellte Rohzuckerpräparation, gekennzeichnet durch einen Gehalt an 10 bis 180 mg/kg, insbesondere 20 bis 170 mg/kg, insbesondere 40 bis 180 mg/kg, insbesondere 60 bis 130 mg/kg, insbesondere 69 bis 125 mg/kg γ-Aminobuttersäure (jeweils bezogen auf das Gesamtgewicht der getrockneten Rohzuckerpräparation).

In einer besonders bevorzugten Ausführungsform der vorliegenden Erfindung ist die mittels eines der erfindungsgemäßen Verfahren hergestellte Rohzuckerpräparation gekennzeichnet durch einen Gehalt an 60 bis 130 mg/kg γ-Aminobuttersäure (bezogen auf das Gesamtgewicht der getrockneten Rohzuckerpräparation).

In einer weiteren bevorzugten Ausführungsform der vorliegenden Erfindung ist die mittels eines der erfindungsgemäßen Verfahren hergestellte Rohzuckerpräparation, gekennzeichnet durch einen Gehalt an höchstens 0,1 g/100 g Fructose, höchstens 0,1 g/100 g Glucose, mindestens 97 g /100 g Saccharose, höchstens 0,2 g/100 g Maltose oder höchstens 0,2 g/100 g Lactose (jeweils bezogen auf 100 g Gesamtgewicht der getrockneten Rohzuckerpräparation).

In einer weiteren bevorzugten Ausführungsform der vorliegenden Erfindung ist die mittels eines der erfindungsgemäßen Verfahren hergestellte Rohzuckerpräparation, gekennzeichnet durch Gehalte an höchstens 0,1 g/100 g Fructose, höchstens 0,1 g/100 g Glucose, mindestens 97 g /100 g Saccharose, höchstens 0,2 g/100 g Maltose und höchstens 0,2 g/100 g Lactose (jeweils bezogen auf 100 g Gesamtgewicht der getrockneten Rohzuckerpräparation).

In einer besonders bevorzugten Ausführungsform der vorliegenden Erfindung ist die mittels eines der erfindungsgemäßen Verfahren hergestellte Rohzuckerpräparation, gekennzeichnet durch die die erfindungsgemäß getrocknete Rohzuckerpräparation kennzeichnenden Gehalte an Aromen, freien α-Aminosäuren, den Gehalt an γ-Aminobuttersäure und/oder den Gehalt an α-Amino-Stickstoff.

Im Zusammenhang mit der vorliegenden Erfindung wird unter einem "Rohzucker" oder einer "Rohzuckerpräparation" kristalline Saccharose oder eine kristalline Saccharose-haltige Präparation verstanden, die insbesondere in fester, insbesondere in getrockneter Form vorliegt, und die durch Kristallisation von in Dicksaft vorhandener Saccharose hergestellt wurde, ohne dass zwischen einer ein- oder mehrstufigen Kristallisation der Saccharose aus dem Dicksaft und dem Erhalt des Rohzuckers die aus der genannten Kristallisation von Dicksaft erhaltene Saccharose einem oder mehreren Auflöse-, Schmelz-, Re- und Umkristallisationsschritten unterzogen wurde, demgemäß keiner Raffination unterzogen wurde. Gemäß der vorliegenden Erfindung wird somit unter "Rohzucker" ein unraffinierter Zucker verstanden.

In besonders bevorzugter Ausführungsform wird unter "Rohzucker" insbesondere ein Rohzucker verstanden, wobei die diesen Rohzucker bildende Saccharose kristallisiert ist und aus Zuckerrübenmaterial stammt, und wobei im Rahmen der Bereitstellung des Rohzuckers aus dem Zuckerrübenmaterial lediglich eine Kristallisation von Dicksaft, die gegebenenfalls in einem Schritt oder in mehreren Kristallisationsschritten oder -zyklen durchgeführt worden sein kann, durchgeführt wurde, und die zur Bereitstellung einer ersten Magmapräparation, enthaltend aus dem Dicksaft auskristallisierte Saccharose in Form einer ersten Saccharosekristallfraktion führt, und wobei im Anschluss an die Kristallisation des Dicksafts die Saccharosekristallfraktion den Verfahrensschritten f) und g) zugeführt wird, ohne dass die erste Saccharosekristallfraktion aufgelöst und einem weiteren Kristallisationsschritt, zum Beispiel einer Re- oder Umkristallisation, unterzogen wird.

Im Zusammenhang mit der vorliegenden Erfindung werden unter "Zucker" Mono-, Di- und Oligosaccharide, insbesondere Saccharose verstanden.

"Nicht-Zuckerstoffe" sind demgemäß keine Zucker, insbesondere keine Saccharose.

Im Zusammenhang mit der vorliegenden Erfindung werden unter "Aromastoffen" solche Stoffe oder Stoffgemische verstanden, die einen spezifischen Geruch, einen spezifischen Geschmack oder einen spezifischen Geruch und Geschmack bewirken.

Im Zusammenhang mit der vorliegenden Erfindung wird unter "Rohsaft" eine wässrige zuckerhaltige Flüssigkeit verstanden, die durch Heißwasserextraktion von Saccharose und anderen extrahierbaren Stoffen aus Zuckerrübenmaterial, insbesondere Zuckerrüben, vorzugsweise Zuckerrübenschnitzeln erhalten wurde. Die Heißwasserextraktion löst nicht nur Saccharose, sondern auch andere, insbesondere wasserlösliche, Substanzen aus dem Zuckerrübenmaterial heraus.

Im Zusammenhang mit der vorliegenden Erfindung wird unter "Dünnsaft" eine wässrige Saccharose-haltige Lösung verstanden, die durch Reinigung von Rohsaft, insbesondere mittels Calciumoxid, CO₂ und gegebenenfalls Flockungsmitteln und/oder Flockungshilfsstoffen erhalten wurde. Die Saftreinigung wird häufig in Form einer Vorkalkung, Hauptkalkung und Carbonatation durchgeführt, wobei insbesondere ein klarer hellgelber Saft mit einem Saccharosegehalt von 10 bis 20 % erhalten wird.

Im Zusammenhang mit der vorliegenden Erfindung wird unter einem "Flockungsmittel" ein Stoff verstanden, der das Zeta-Potential von Teilchen in kolloidalen Suspensionen so beeinflusst, dass sie zu Flocken aggregieren und beispielsweise nach Sedimentation aus dem System entfernt werden können. Flockungsmittel müssen daher die elektrostatische Abstoßung der im Wasser meist negativ aufgeladenen Partikel überwinden. Erfindungsgemäß kann es sich bei den Flockungsmitteln auch um Koagulations-, Flockungshilfsmittel oder Sedimentationsbeschleuniger handeln. Unter "Flockungshilfsmitteln" oder "Sedimentationsbeschleunigern" werden im Zusammenhang mit der vorliegenden Erfindung Verbindungen verstanden, die die Zusammenballung von Feststoffpartikeln zu größeren Einheiten oder Flocken bewirken. Durch die Zusammenballung als Flocken können sich die Feststoffe aufgrund des größeren Masse-/Oberflächenverhältnisses bedeutend schneller absetzen. Gleichzeitig werden die Poren zwischen den einzelnen Teilchen vergrößert, sodass sich das Wasser, dass sich im abgesetzten Schlamm befindet, leicht durch Filtration oder Zentrifugation entfernen lässt.

Im Zusammenhang mit der vorliegenden Erfindung wird unter "Dicksaft" eine wässrige Lösung oder Suspension verstanden, die durch Verdickung, insbesondere Eindampfung von Wasser, aus Dünnsaft erhalten wurde. Der Saccharosegehalt von Dicksaft liegt insbesondere in einem Bereich von 60 bis 90 % Gew.-%, insbesondere 60 bis 80 Gew.-%, insbesondere 70 bis 80 Gew.-%, insbesondere 60 bis 70 Gew.-%, insbesondere 65 bis 70 Gew.-% (bezogen auf das Gesamtgewicht des Dicksaftes).

Im Zusammenhang mit der vorliegenden Erfindung wird unter "Kristallisation zum Erhalt einer ersten Magmapräparation" ein Verfahrensschritt verstanden, im Rahmen dessen, insbesondere in einer Kochstation, ein Dicksaft eingedampft wird, insbesondere unter Unterdruck, sodass es zur Saccharose-Kristallisation kommt. Insbesondere wird bei niedrigeren Temperaturen, insbesondere von 65 bis 85 °C, Wasser verdampft, sodass es ohne eine Karamellisierung von Zucker zu einer Saccharose-Kristallisation kommt. Gegebenenfalls kann durch Zugabe von Impfkristallen eine gleichmäßige Kristallbildung bewirkt werden. Die sich in dem Dicksaft bildenden Saccharose-Kristalle werden hier auch als "Saccharosekristallfraktion" bezeichnet.

Im Zusammenhang mit der vorliegenden Erfindung wird unter einer "Magmapräparation" eine Saccharose-Kristalle aufweisende wässrige Suspension verstanden, die im Verlauf eines Kristallisationsprozesses von Dicksaft entsteht und erhalten wurde und neben Saccharose-Kristallen eine Mutterlauge aufweist. Eine Magmapräparation kann hier auch als Kristallsuspension bezeichnet sein.

Im Zusammenhang mit der vorliegenden Erfindung wird unter einem "Abtrennen von mindestens einem Anteil der Mutterlauge von der Magmapräparation" insbesondere ein Zentrifugieren, Filtrieren oder beides, insbesondere ein Zentrifugieren, verstanden, im Rahmen derer beziehungsweise dessen Saccharose-Kristalle, insbesondere eine Saccharosekristallfraktion, von der Mutterlauge abgetrennt wird.

Unter einem "Abtrennen von mindestens einem Anteil der Mutterlauge von der Magmapräparation" wird demnach erfindungsgemäß einerseits verstanden, dass ein Teil der Mutterlauge einer Magmapräparation aus dieser abgetrennt wird, während ein anderer Teil als Bestandteil der Magmapräparation verbleibt. Unter einem "Abtrennen von mindestens einem Anteil der Mutterlauge von der Magmapräparation" wird ebenso verstanden, dass mittels Zentrifugation, Filtration oder mittels Zentrifugation und Filtration, alle mittels eines oder beider dieser Verfahren abtrennbaren Anteile von Mutterlauge aus der Magmapräparation entfernt werden, wobei jedoch durch Filtration, Zentrifugation oder beides nicht abtrennbare Anteile von Mutterlauge, die an den Saccharosekristallen der Saccharosekristallfraktion an der Oberfläche anhaften, als mittels dieser Verfahren nicht abtrennbar gelten. Gemäß dieser Ausführungsform ist ein "Abtrennen von mindestens einem Anteil der Mutterlauge von der Magmapräparation" gleichbedeutend mit einem "vollständigen Abtrennen von Mutterlauge von der Magmapräparation". Die Anwesenheit von mittels der vorgenannten Verfahren nicht abtrennbaren Anteilen an Mutterlauge bedeutet damit nicht, dass das Abtrennen nicht vollständig erfolgte.

Im Zusammenhang mit der vorliegenden Erfindung wird unter dem Begriff "Saccharosekristallfraktion" die Gesamtheit aller in einer Zusammensetzung, insbesondere einer wässrigen Zusammensetzung, insbesondere einer Magmapräparation, vorhandenen Saccharosekristalle, das heißt der auskristallisierten Saccharose, verstanden. Der Begriff "Saccharosekristallfraktion" ist daher gleichbedeutend mit der Gesamtheit aller Saccharosekristalle beziehungsweise der Gesamtheit aller auskristallisierten, das heißt kristallin vorliegenden Saccharosemoleküle in einer Zusammensetzung oder in isolierter Form. Ohne an die Theorie gebunden zu sein, ist der Einfluss einer reinen Saccharosekristallfraktion auf die Geruchsentwicklung von Rohzuckerpräparationen zu vernachlässigen. Der Geruch von Rohzuckerpräparationen hängt somit im Wesentlichen von der Mutterlauge, insbesondere der an der Oberfläche von Saccharosekristallen der Saccharosekristallfraktion anhaftender Mutterlauge, ab.

Im Zusammenhang mit der vorliegenden Erfindung wird unter "Mutterlauge" eine wässrige Lösung verstanden, die von in einer Magmapräparation enthaltenen Saccharose-Kristallen, also einer Saccharosekristallfraktion, durch Zentrifugation oder Filtration abgetrennt werden kann. Die Mutterlauge enthält dabei neben nicht-auskristallisierter Saccharose noch weitere nicht-auskristallisierte Verbindungen (Nicht-Zuckerstoffe).

Im Zusammenhang mit der vorliegenden Erfindung wird unter einem "Sirup" eine Mutterlauge verstanden.

Im Zusammenhang mit der vorliegenden Erfindung wird unter einer "anderen Mutterlauge" eine Mutterlauge verstanden, die der Saccharosekristallfraktion in Verfahrensschritt f), insbesondere Verfahrensschritt f3) hinzugefügt wird und die bevorzugt eine erste, zweite oder weitere Mutterlauge sein kann. Erfindungsgemäß kann insbesondere vorgesehen sein, dass die in Verfahrensschritt f3) hinzugefügte andere Mutterlauge eine hinzugefügte erste Mutterlauge ist, sodass eine derartig bereitgestellte Magmapräparation gemäß Schritt f) einerseits eine hinzugefügte erste Mutterlauge, also andere Mutterlauge, andererseits aber auch eine unmittelbar aus Verfahrensschritt e) noch in der Magmapräparation enthaltene erste Mutterlauge enthält.

Im Zusammenhang mit der vorliegenden Erfindung wird unter einer "ersten Saccharosekristallfraktion" und einer "ersten Magmapräparation" die Saccharosekristallfraktion und die Mischung aus Mutterlauge und Saccharosekristallfraktion bezeichnet, die im Verlauf eines Kristallisationsprozesses von Dicksaft gebildet werden. Im Zusammenhang mit der vorliegenden Erfindung wird unter dem Begriff "erste Mutterlauge" die Mutterlauge verstanden, die im Verlauf eines Kristallisationsprozesses von Dicksaft entsteht.

Unter einer "zweiten Magmapräparation" wird erfindungsgemäß eine Mischung aus Mutterlauge und Saccharosekristallfraktion bezeichnet, die im Verlauf eines Kristallisationprozesses von erster Mutterlauge gebildet wird und demgemäß aus einer zweiten Saccharosekristallfraktion und einer zweiten Mutterlauge zusammengesetzt ist.

Unter einer "zweiten Saccharosekristallfraktion" wird die Saccharosekristallfraktion verstanden, die im Verlauf eines Kristallisationsprozesses einer ersten Mutterlauge gebildet wird.

Im Zusammenhang mit der vorliegenden Erfindung wird unter einer "zweiten Mutterlauge" eine Mutterlauge verstanden, die im Verlauf eines Kristallisationsprozesses von Saccharose aus einer ersten Mutterlauge gebildet wurde. Unter einer zweiten Mutterlauge kann insbesondere eine Mutterlauge verstanden werden, welche eine bezogen auf Nicht-Zuckerstoffe konzentrierte erste Mutterlauge ist. Die zweite Mutterlauge enthält dabei neben nicht-auskristallisierter Saccharose noch weitere nicht-auskristallisierte Verbindungen (Nicht-Zuckerstoffe).

Im Zusammenhang mit der vorliegenden Erfindung wird unter "Puderzucker" eine Präparation von in festem Aggregatzustand vorliegenden Saccharosekristallen verstanden, die insbesondere trocken ist, und insbesondere gemahlene und/oder feinkörnige Saccharosekristalle aufweist, insbesondere in pulver- oder/und staubartiger Form vorliegt.

Im Zusammenhang mit der vorliegenden Erfindung wird unter "Heißluft" insbesondere Luft mit einer Temperatur von mindestens 30 °C, insbesondere 30 bis 180 °C, insbesondere 35 bis 160 °C, insbesondere 45 bis 100 °C, insbesondere 35 bis 60 °C, insbesondere 40 bis 60 °C, insbesondere 50 bis 60 °C verstanden, insbesondere ein Luftstrom dieser Temperatur.

Im Zusammenhang mit der vorliegenden Erfindung stellen Druckangaben den absoluten Druck dar und werden insbesondere in mbar ausgedrückt.

Im Zusammenhang mit der vorliegenden Erfindung wird unter reduziertem Druck ein gegenüber atmosphärischem Druck reduzierter Druck verstanden, insbesondere ein Druck von 10 bis 900, 20 bis 800, insbesondere 100 bis 800, insbesondere 50 bis 700, insbesondere 20 bis 600, insbesondere 30 bis 400 mbar, insbesondere 40 bis 200 mbar, insbesondere 50 bis 100 mbar verstanden.

Im Zusammenhang mit der vorliegenden Erfindung wird unter erhöhtem Druck ein gegenüber atmosphärischem Druck erhöhter Druck verstanden.

Im Zusammenhang mit der vorliegenden Erfindung wird unter dem Begriff "α-Aminosäuren" "freie α-Aminosäuren" verstanden.

Im Zusammenhang mit der vorliegenden Erfindung werden die Aromen vorzugsweise mittels Gaschromatographie, insbesondere GC-MS, insbesondere Festphasenmikroextraktion, SPME (solid phase micro extraction), bestimmt. Im Zusammenhang mit der vorliegenden Erfindung werden die Gehalte an freien α-Aminosäuren, α-Amino-Stickstoff und γ-Aminobuttersäure durch chromatographische Auftrennung mittels HPLC, insbesondere mittels RP-HPLC mit Vorsäulenderivatisierung, insbesondere durch OPA (ortho-Phtaldialdehyd) und FMOC (Fluorenylmethoxycarbonyl) (die Aminosäuren werden durch OPA und FMOC chemisch verändert d.h. derivatisiert, damit sie mittels UV-Detektion detektiert werden können) bestimmt. Im Zusammenhang mit der vorliegenden Erfindung wird der Gehalt an Saccharose, Maltose, Lactose, Fructose und Glucose mittels HPLC bestimmt.

Im Zusammenhang mit der vorliegenden Erfindung wird der Wassergehalt mittels der Methode nach Karl-Fischer tritrimetrisch bestimmt.

Sofern im Zusammenhang mit der vorliegenden Erfindung quantitative Angaben, insbesondere Prozentangaben, von Komponenten eines Produktes oder einer Zusammensetzung angegeben sind, addieren diese, sofern nicht explizit anders angegeben oder fachmännisch ersichtlich, zusammen mit den anderen explizit angegebenen oder fachmännisch ersichtlichen weiteren Komponenten der Zusammensetzung oder des Produktes auf 100 % der Zusammensetzung und/oder des Produktes auf.

Sofern im Zusammenhang mit der vorliegenden Erfindung ein "Vorhandensein", ein "Enthalten", ein "Aufweisen" oder ein "Gehalt" einer Komponente ausdrücklich erwähnt oder impliziert wird bedeutet dies, dass die jeweilige Komponente vorhanden ist, insbesondere in messbarer Menge vorhanden ist.

Sofern im Zusammenhang mit der vorliegenden Erfindung ein "Vorhandensein", ein "Enthalten" oder ein "Aufweisen" einer Komponente in einer Menge von 0 [Einheit], insbesondere mg/kg, µg/kg oder Gew.-%, ausdrücklich erwähnt oder impliziert wird, bedeutet dies, dass die jeweiligen Komponenten nicht in messbarer Menge vorhanden, insbesondere nicht vorhanden ist.

Sofern im Zusammenhang mit der vorliegenden Erfindung die erste und zweite Nachkommastelle oder die zweite Nachkommastelle nicht angegeben sind/ist, sind/ist diese als 0 zu setzen.

Unter dem Begriff "und/oder" wird in Zusammenhang mit der vorliegenden Erfindung verstanden, dass alle Mitglieder einer Gruppe, welche durch den Begriff "und/oder" verbunden sind, sowohl alternativ zueinander als auch jeweils untereinander kumulativ in einer beliebigen Kombination offenbart sind. Dies bedeutet für den Ausdruck "A, B und/oder C", dass folgender Offenbarungsgehalt darunter zu verstehen ist: a) A oder B oder C oder b) (A und B), oder c) (A und C), oder d) (B und C), oder e) (A und B und C).

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktioneller und qualitativ untergeordneter Natur sind. In dieser Ausführungsform sind die Begriffe "umfassend" und "aufweisend" gleichbedeutend mit dem Begriff "im Wesentlichen bestehend aus".

Weitere vorteilhafte Ausgestaltungen ergeben sich aus den Unteransprüchen.

Die Erfindung wird nachstehend ohne Einschränkung des allgemeinen Erfindungsgedankens anhand von Beispielen und dazugehöriger Zeichnungen näher beschrieben.

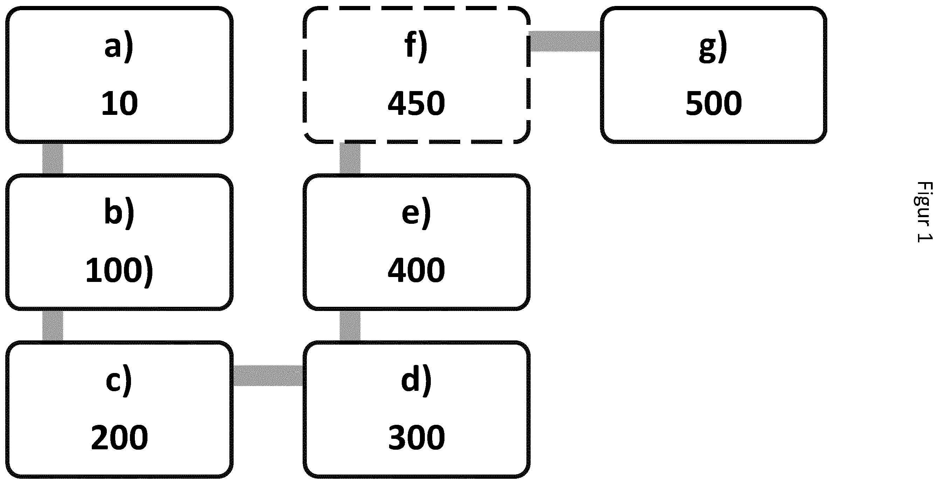

Die Figuren 1 bis 6 zeigen schematisch verschiedene Ausführungsformen der erfindungsgemäßen Verfahren sowie Versuchsergebnisse.

Die in den Figuren verwendeten Buchstaben kennzeichnen die Verfahrensschritte gemäß der vorliegenden Erfindung.

Figur 1 zeigt eine erfindungsgemäße Verfahrensweise gemäß der in Verfahrensschritt a) Zuckerrübenmaterial 10 bereitgestellt wird. Dieses Zuckerrübenmaterial 10 wird, um Rohsaft 100 zu erhalten, in einem Verfahrensschritt b) einer Rohsaftextraktion unterzogen, wobei der erhaltene Rohsaft 100 in einem Verfahrensschritt c) einer Rohsaftreinigung unterzogen wird, die zum Erhalt eines Dünnsafts 200 führt. Der Dünnsaft 200 wird in einem Verfahrensschritt d) aufkonzentriert, woraus Dicksaft 300 resultiert. Der erhaltene Dicksaft 300 wird in einem Verfahrensschritt e) zum Erhalt einer ersten Magmapräparation 400, enthaltend eine erste Saccharosekristallfraktion und eine erste Mutterlauge, einer Kristallisation unterzogen. Die so hergestellte und in Verfahrensschritt e) bereitgestellte erste Magmapräparation 400 wird anschließend in einem Verfahrensschritt f) auf einen Gehalt von 76 bis 98 Gew.-% Saccharosekristallfraktion und 2 bis 24 Gew.-% Mutterlauge (jeweils bezogen auf das Gesamtgewicht der Magmapräparation) eingestellt und eine Magmapräparation 450 erhalten. In einem Verfahrensschritt g) wird diese Magmapräparation 450 schließlich zum Erhalt einer Rohzuckerpräparation 500 getrocknet.

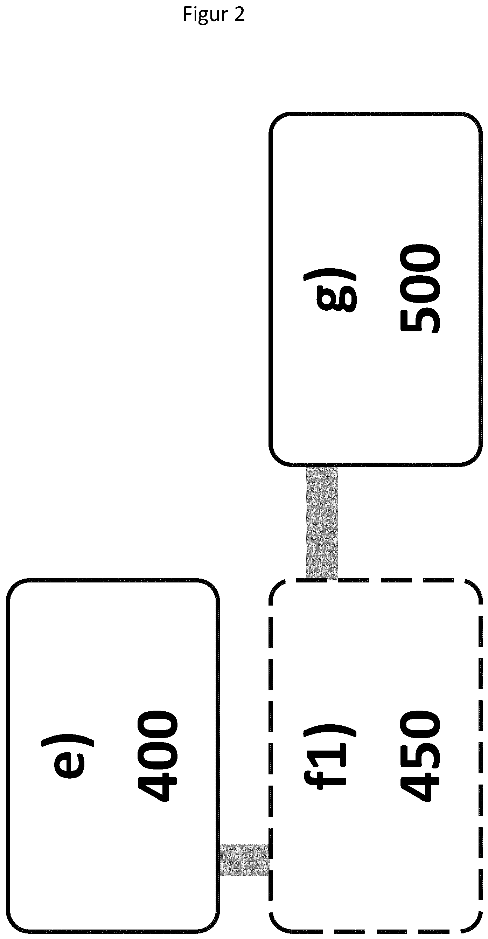

Figur 2 zeigt eine Ausführungsform der vorliegenden Erfindung, gemäß der eine erste Magmapräparation 400 in einem Verfahrensschritt e) bereitgestellt wird und in einem Verfahrensschritt f1) ein teilweises Abtrennen der ersten Mutterlauge der ersten Magmapräparation 400 bis zu einem Mutterlaugengehalt von 2 bis 24 Gew.-% erfolgt, sodass eine Magmapräparation 450, enthaltend 76 bis 98 Gew.-% einer ersten Saccharosekristallfraktion und 2 bis 24 Gew.-% einer ersten Mutterlauge (jeweils bezogen auf das Gesamtgewicht der Magmapräparation), erhalten wird, die in einem Verfahrensschritt g) zum Erhalt einer Rohzuckerpräparation 500 getrocknet wird.

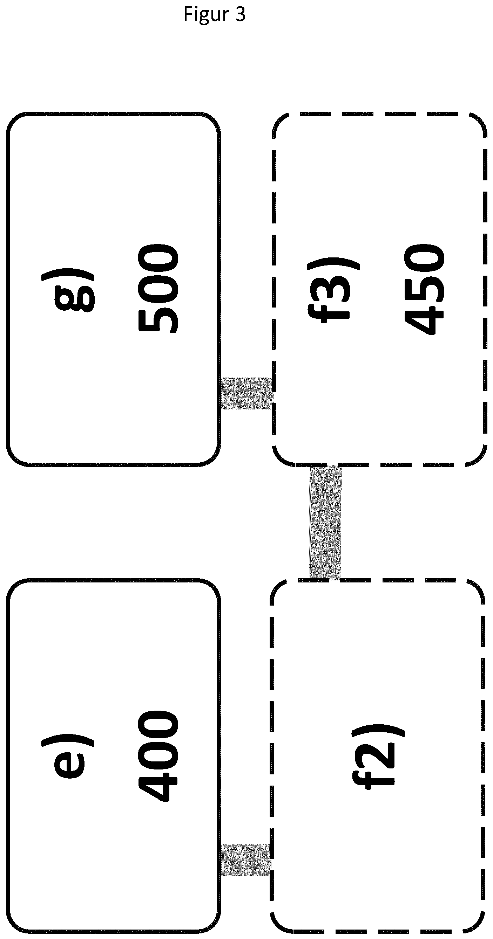

In Figur 3 ist eine weitere Ausführungsform der vorliegenden Erfindung dargestellt, gemäß der in einem Verfahrensschritt e) eine erste Magmapräparation 400 bereitgestellt wird, aus der in einem Verfahrensschritt f2) die erste Mutterlauge vollständig abgetrennt wird, wobei die Abtrennung insbesondere durch Zentrifugation und/oder Filtration erfolgt. Anschließend wird in einem Verfahrensschritt f3) eine andere Mutterlauge, insbesondere eine zweite Mutterlauge, erhalten durch Kristallisation einer ersten Mutterlauge, die zum Erhalt einer zweiten Magmapräparation führt und Abtrennen dieser zweiten Mutterlauge von einer der zweiten Magmapräparation, hinzugefügt, sodass eine Magmapräparation 450 enthaltend 76 bis 98 Gew.-% einer Saccharosekristallfraktion und 2 bis 24 Gew.-% Mutterlauge (jeweils bezogen auf das Gesamtgewicht der Magmapräparation) erhalten wird. Diese wird in einem darauffolgenden Verfahrensschritt g) zum Erhalt einer Rohzuckerpräparation 500 getrocknet.

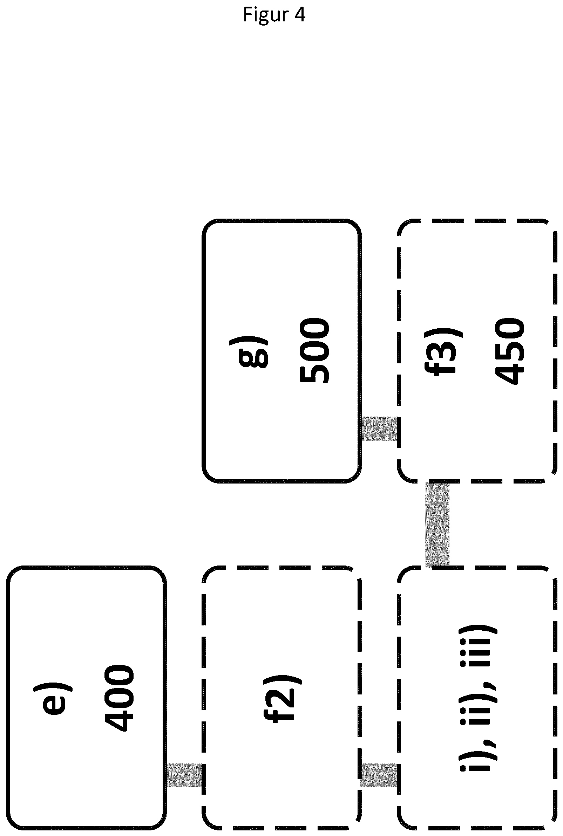

In Figur 4 wird eine erfindungsgemäße Verfahrensweise analog zu der von Figur 3 dargestellt, wobei nach dem vollständigen Abtrennen der ersten Mutterlauge gemäß Verfahrensschritt f2) vor dem Hinzufügen einer anderen Mutterlauge, insbesondere der zweiten Mutterlauge, gemäß Verfahrensschritt f3), die nach Abtrennen der ersten Mutterlauge erhaltene Saccharosekristallfraktion i) gewaschen, ii) getrocknet oder iii) gewaschen und getrocknet wird.

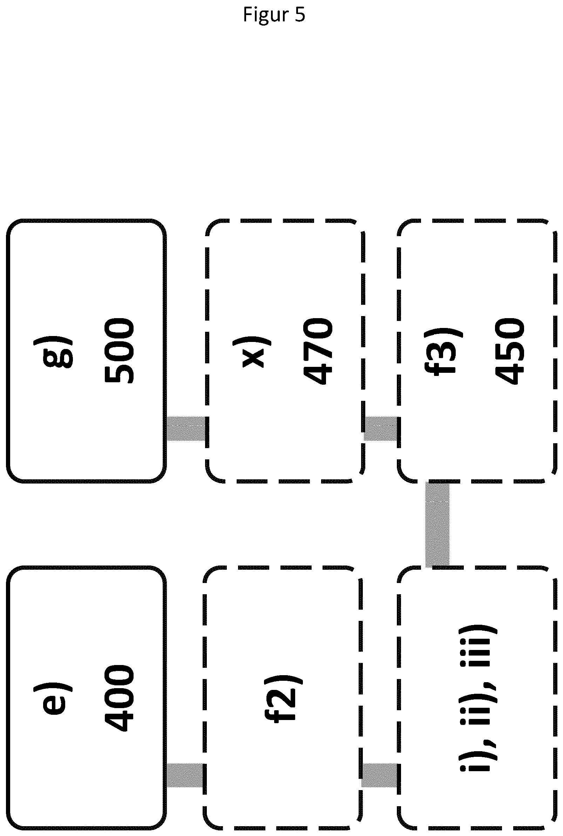

In Figur 5 wird eine erfindungsgemäße Verfahrensweise analog zu der von Figur 4 dargestellt, wobei in einem Verfahrensschritt x) zu der in Verfahrensschritt f) erhaltenen Magmapräparation 450 enthaltend 76 bis 98 Gew.-% Saccharosekristallfraktion und 2 bis 24 Gew.-% Mutterlauge (jeweils bezogen auf das Gesamtgewicht der Magmapräparation) vor dem Durchführen von Verfahrensschritt g) Puderzucker 470 hinzugegeben wird. Die erhaltene Puderzucker-haltige Präparation wird in einem darauffolgenden Verfahrensschritt g) zum Erhalt einer Rohzuckerpräparation 500 getrocknet.

Die in Figur 5 dargestellte Verfahrensweise des Einsatzes des Verfahrensschrittes x) im Verfahren gemäß Figur 4 kann in erfindungsgemäß ebenfalls bevorzugter Ausführungsform auch in den Verfahrensweisen gemäß der Figuren 2 und 3 realisiert werden, wobei in dem Verfahrensschritt x) zu der in Verfahrensschritt f) der Figuren 2 (f1) und 3 (f3) erhaltenen Magmapräparation 450 enthaltend 76 bis 98 Gew.-% Saccharosekristallfraktion und 2 bis 24 Gew.-% Mutterlauge (jeweils bezogen auf das Gesamtgewicht der Magmapräparation) vor dem Durchführen von Verfahrensschritt g) Puderzucker 470 hinzugegeben wird. Die erhaltene Puderzucker-haltige Präparation wird in einem darauffolgenden Verfahrensschritt g) zum Erhalt einer Rohzuckerpräparation 500 getrocknet.

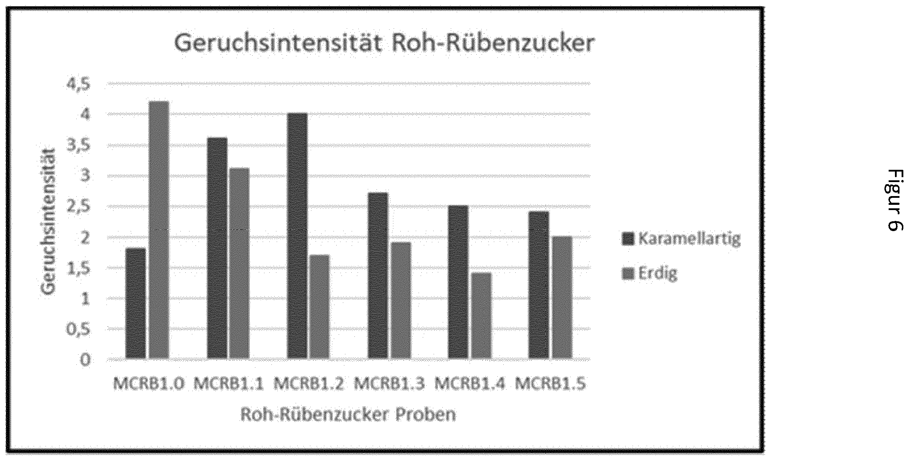

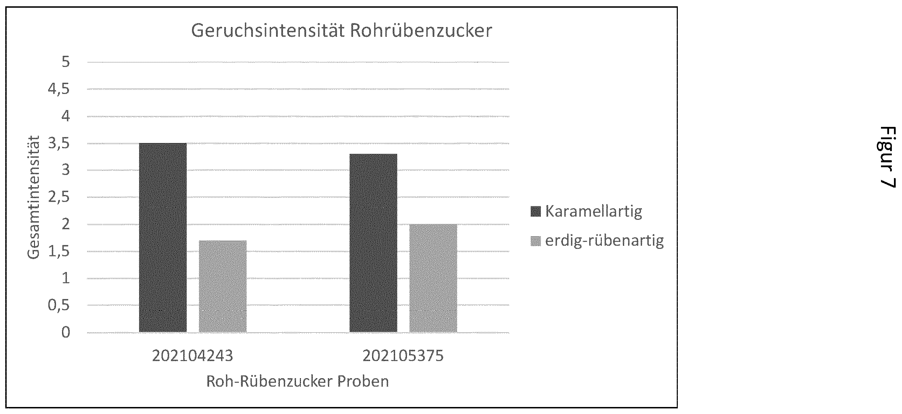

In Figuren 6 und 7 wird das Ergebnis der sensorischen Geruchsprüfung des erfindungsgemäß erhaltenen Rohrübenzuckers dargestellt.

### Beispiel 1

### Herstellung von Roh-Rübenzucker: Erste Saccharosekristallfraktion (Weißzucker 2) und erste Mutterlauge (Weißzucker 2-Grünablauf)

Dicksaft wurde gemäß der Verfahrensschritte a) bis e) erhalten und kristallisiert, insbesondere auf für den Fachmann bekannte Art und Weise aus Zuckerrüben hergestellt (siehe hierzu zum Beispiel Zuckertechnologie, P.W. van der Poel et al., Bartens Verlag, 1998, Kap.6 S.329-382 Extraktion, Kap.9 S.485-584 Saftreinigung, Kap.11 S.607-669 Wärmewirtschaft, Kap.12 S.671-860 Kristallisation, Kap.13 S.861-894 Zentrifugation oder Zucker, Rübenzucker und Rohrzucker, Schiweck, Ullmanns Enzyklopädie der technischen Chemie, 4. Auflage, Band 24, Bartholome Verlag, 1983).

Eine erste Magmapräparation (Weißzucker 2 Magma) wurde nach den Verfahrensschritten d) und e), also nach dem Aufkonzentrieren, insbesondere Abkochen, und Kristallisieren, aus dem Kochapparat entnommen, in Verfahrensschritt e) erhalten und direkt in einer Rousselet-Zentrifuge (d_{(Rotor)} = 30 cm, Filterflies Porengröße = 25 bis 100 µm, Umdrehungen = 3000 U/min für 3,5 min) zentrifugiert (Verfahrensschritt f2) (ohne Deckwasser, das heißt nicht gewaschen). Da der Zucker nicht gewaschen wurde, haften noch geringe Mengen Sirup auf der Oberfläche der Zuckerkristalle. Die so abgetrennte erste Saccharosekristallfraktion wurde in Verfahrensschritt ii) direkt nach der Zentrifugation gemäß Verfahrensschritt f2) mit Heißluft getrocknet. Der aus der Zentrifugation erhaltene Ablaufsirup (erste Mutterlauge, beziehungsweise Weißzucker 2-Grünablauf) wurde gesammelt und bilanziert. Nun wurden zu dem getrockneten Weißzucker 0, 10, 20, 30, 40 beziehungsweise 50 Gew.-% (MCRB1.0 - MCRB1.5) der ursprünglich im Weißzucker 2 Magma enthaltenen Menge an erster Mutterlauge (Ablaufsirup) zugemischt (Verfahrensschritt f3)) (entsprechend 0, 6, 11, 16, 20, 24 Gew.-% bezogen auf das Gesamtgewicht der Magmapräparation), homogenisiert und erneut mit Heißluft getrocknet (Verfahrensschritt g) (vergleiche Figuren 1, 2 und 4).

Die 6 erhaltenen Rohzuckerpräparationen (Proben) wurden mittels Gaschromatographie (GC-MS, Methode: Festphasenmikroextraktion SPME = solid phase microextraction) analysiert und die in den Proben enthaltenen Aromen bestimmt. Die Geruchsintensität (Werte von 0 bis 8) der getrockneten Rohzucker-Proben, wurden durch eine sensorische Geruchsprüfung bestimmt (Figur 5). Weiterhin wurden die Farbe-in-Lösung der Proben in ICUMSA-Einheiten [IE] und der Gesamtwassergehalt titrimetrisch nach Karl-Fischer in [g Wasser/100g Rohzuckerpräparation] bestimmt. Für eine Probe mit der Bezeichnung "MCRB1.2" wurden zusätzlich die Gehalte an freien α-Aminosäuren (D, E, N, S, Q, H, G, T, R, A, Y, C, V, M, W, F, I, L, K, P) und γ-Aminobuttersäure (GABA) sowie der α-Amino-Stickstoffgehalt in [mg α-Amino-Stickstoff beziehungsweise freien Aminosäuren/kg Rohzuckerpräparation] mittels HPLC (chromatographische Auftrennung auf einer RP-HPLC mit Vorsäulenderivatisierung durch OPA (ortho-Phtaldialdehyd) und FMOC (Fluorenylmethoxycarbonyl) "Agilent application note 5990-4547EN") und der Saccharose, Maltose, Lactose, Fructose und Glucose (Invertzucker) Gehalt in [g Zucker/100g Rohzuckerpräparation] mittels HPLC bestimmt. Die Ergebnisse der Analysen sind nachfolgend in Tabellen 1 bis 4 aufgeführt. Die Probe, welcher kein weiterer Ablaufsirup (erste Mutterlauge) hinzugefügt wurde (siehe Tabelle 1, Probe: MeRB1.0), stellt die sogenannte Negativ-Kontrollprobe (nicht-erfindungsgemäß) dar. Dieser Roh-Rübenzucker weist nach der Trocknung noch einen sehr unangenehmen, rübenartigen Geruch/Geschmack auf und die Menge an auf der Oberfläche der Zuckerkristalle anhaftendem Sirup reicht nicht aus, um die unangenehmen Aromen/Geschmäcke zu maskieren.

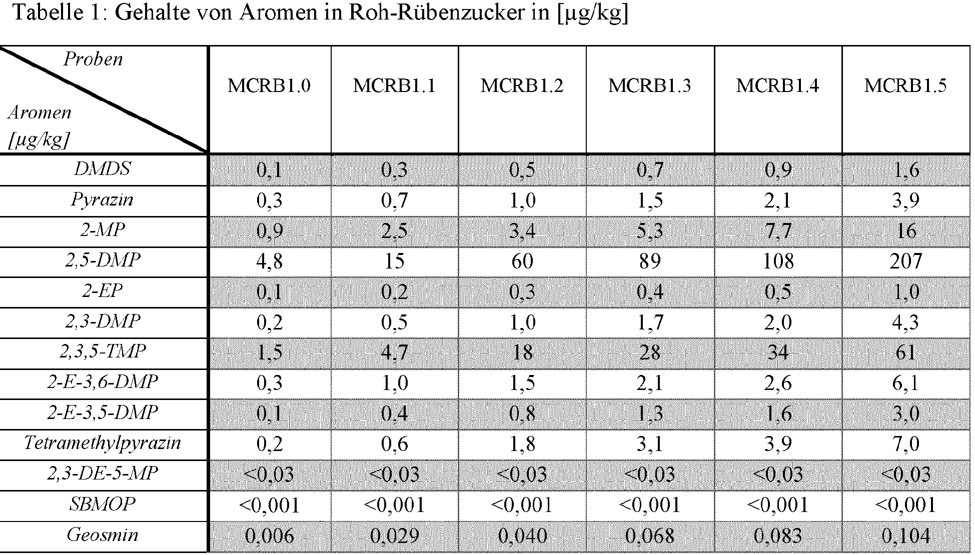

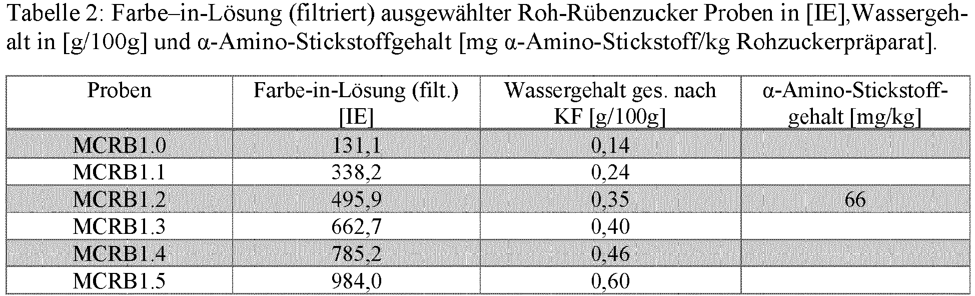

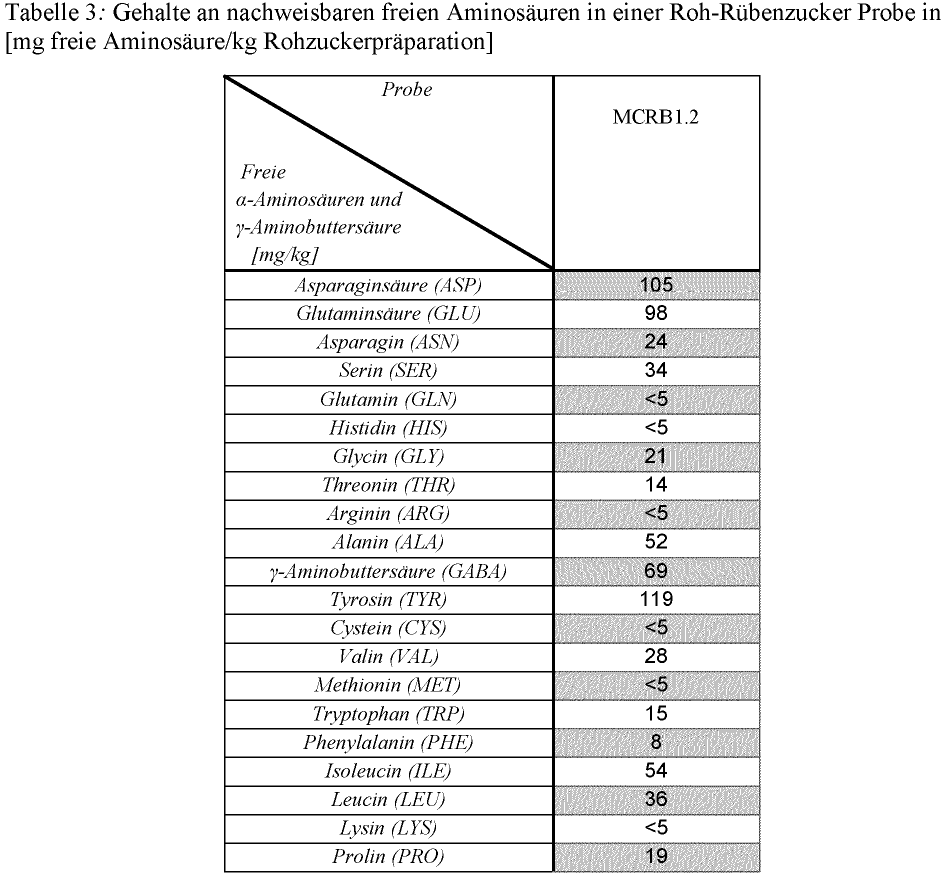

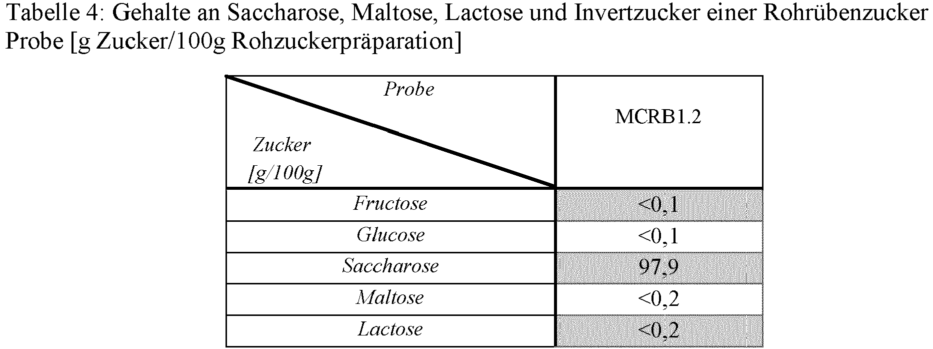

In Figur 6 wird das Ergebnis der sensorischen Geruchsprüfung des erfindungsgemäß erhaltenen Rohrübenzuckers dargestellt.

Die Proben mit den Bezeichnungen MeRB1.1, MCRB1.2, MCRB1.3, MCRB1.4, MCRB1.5 als erfindungsgemäß hergestellte getrocknete Rohzuckerpräparationen zeichnen sich dagegen durch einen überraschend angenehmen, wohlriechenden und naturbelassenen Geruch und Geschmack aus. Zu erkennen ist, dass die erfindungsgemäßen Rohzuckerpräparationen gegenüber der Kontrolle MCRB1.0 einen deutlich intensiveren karamellartigen, insbesondere karamell-nussartigen Geruch aufweisen, während gleichzeitig ein unerwünscht erdiger muffiger Geruch reduziert ist. Die erfindungsgemäße Rohzuckerpräparation MCRB1.2 stellt ein besonders vorteilhaftes Verhältnis von attraktivem karamellartigen Geruch in hoher Intensität und vergleichsweise nur gering wahrnehmbaren erdigen Geruch bereit.

### Beispiel 2:

### Herstellung von Roh-Rübenzucker: Erste Saccharosekristallfraktion (Weißzucker 2) und zweite Mutterlauge (Rohzucker-Grünablauf)

Eine getrocknete, erste Saccharosekristallfraktion erhalten gemäß Beispiel 1, Figuren 1, 2 und 4 nach Durchführung von Verfahrensschritten a) bis f2) und ii) (EU2, Körnung M) wurde mit 6, 11 und 16 Gew.-% (bezogen auf das Gesamtgewicht der Magmapräparation) zweiter Mutterlauge (Rohzucker-Grünablauf) zum Erhalt von Magmapräparationen vermischt (Verfahrensschritt f3)) und homogenisiert. Es wurden dementsprechend eine Magmapräparation gehörig zu der Probe MCRB4.1 mit einem Mutterlaugengehalt von 6 Gew.-% und 94 Gew.-% Saccharosekristallfraktion (jeweils bezogen auf das Gesamtgewicht der Magmapräparation), eine Magmapräparation gehörig zu der Probe MCRB4.2 mit einem Mutterlaugengehalt von 11 Gew.-% und 89 Gew.-% Saccharosekristallfraktion (jeweils bezogen auf das Gesamtgewicht der Magmapräparation) und eine Magmapräparation gehörig zu der Probe MCRB4.3 mit einem Mutterlaugengehalt von 16 Gew.-% und 84 Gew.-% Saccharosekristallfraktion (jeweils bezogen auf das Gesamtgewicht der Magmapräparation) erhalten.

Diese zu den genannten Proben gehörigen Magmapräparationen wurden mit Heißluft getrocknet (Verfahrensschritt g) (vgl. Fig. 4). Die dadurch erhaltenen erfindungsgemäßen Roh-Rübenzucker Proben (MCRB4.1 - MCRB4.3) wurden mittels Gaschromatographie (GC-MS, Methode: Festphasenmikroextraktion SPME) analysiert und die in den Proben enthaltenen Geruchsstoffe bestimmt. Weiterhin wurden die Farbe-in-Lösung der Proben in ICUMSA-Einheiten [IE] und der Gesamtwassergehalt titrimetrisch nach Karl-Fischer (KF) in [g Wasser/100g Rohzuckerpräparation] bestimmt. Für die Probe mit der Bezeichnung "MCRB4.2" wurde zusätzlich der Gehalt an freien α-Aminosäuren (D, E, N, S, Q, H, G, T, R, A, Y, C, V, M, W, F, I, L, K, P) und γ-Aminobuttersäure (GABA) sowie der α-Amino-Stickstoffgehalt in [mg α-Amino-Stickstoff beziehungsweise freien Aminosäuren/kg Rohzuckerpräparation] mittels HPLC (Chromatographische Auftrennung auf einer RP-HPLC mit Vorsäulenderivatisierung durch OPA und FMOC, s. "Agilent application note 5990-4547EN") und der Saccharose, Maltose, Lactose, Fructose und Glucose (Invertzucker) Gehalt mittels HPLC bestimmt. Die Ergebnisse der Analysen sind nachfolgend in Tabellen 5 bis 8 aufgeführt.

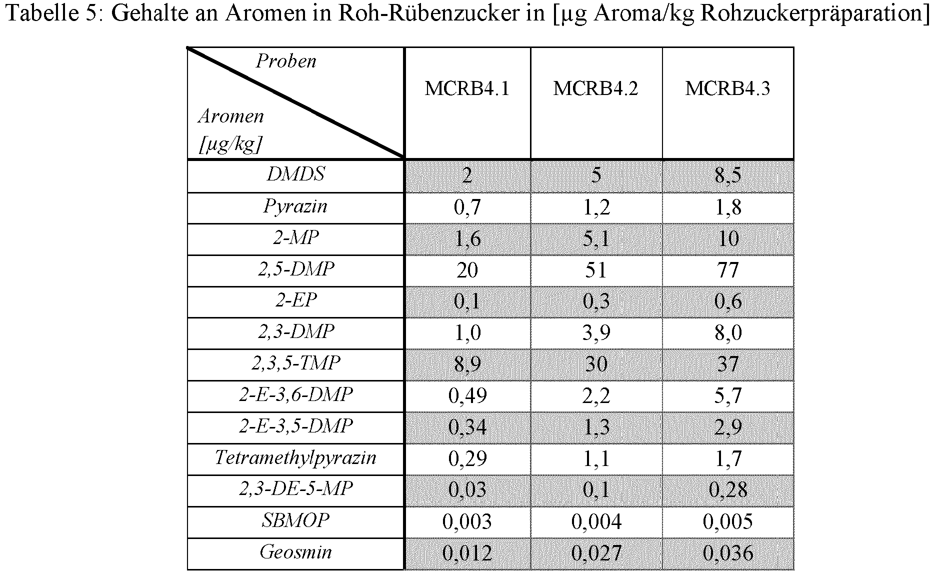

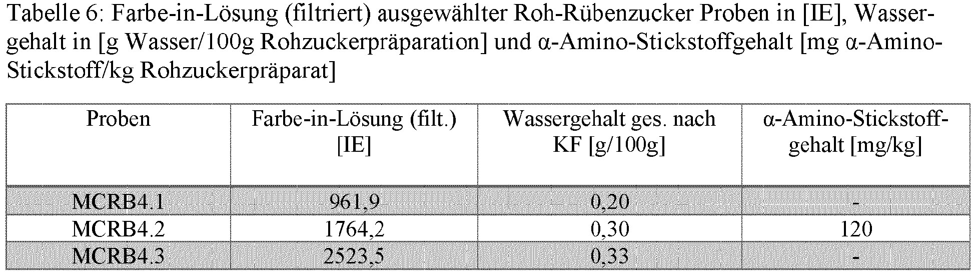

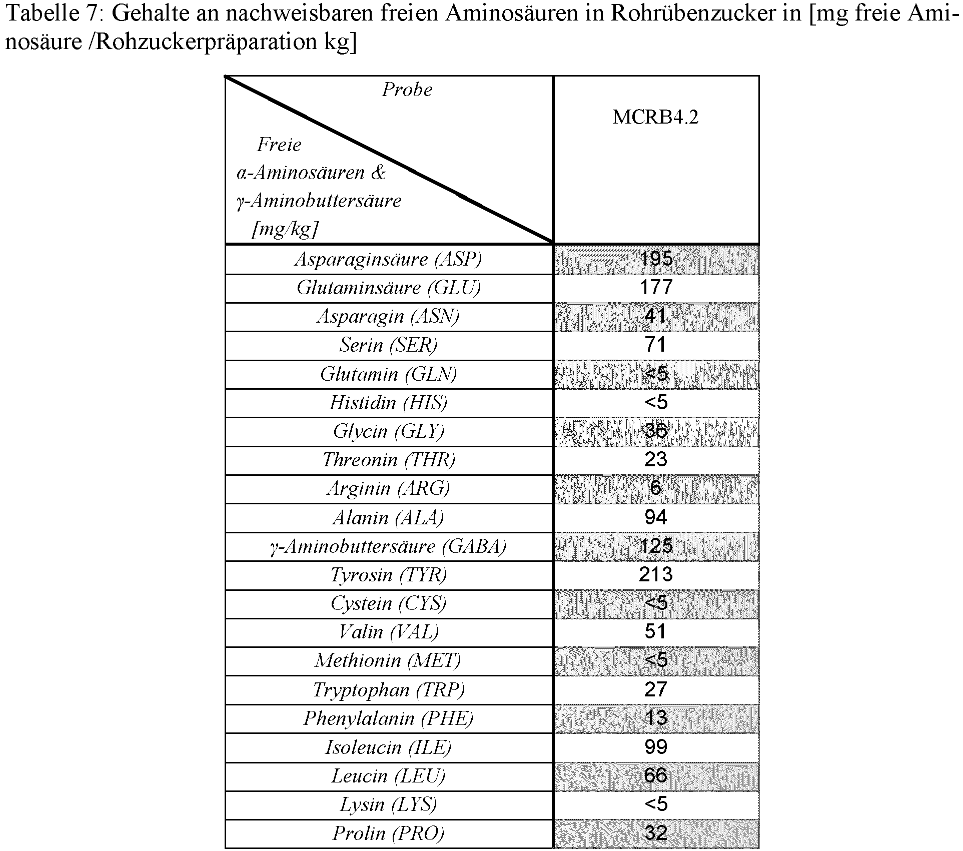

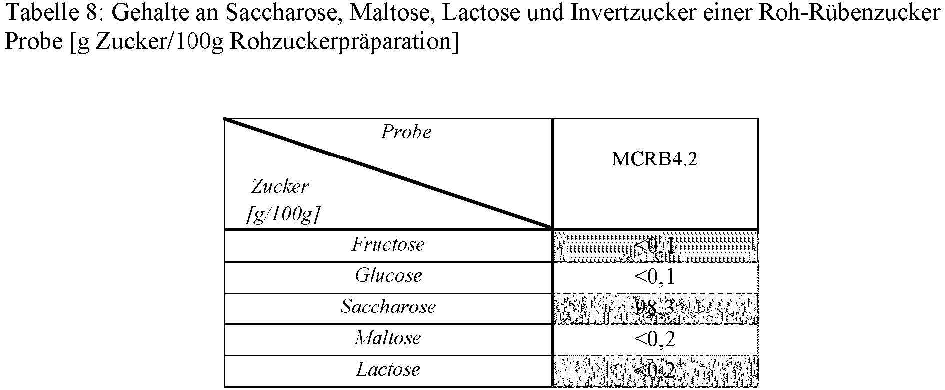

Die erfindungsgemäß erhaltenen Rohzuckerpräparationen mit den Probenbezeichnungen MCRB4.1, MCRB 4.2 und MCRB 4.3 zeichnen sich überraschenderweise durch einen guten und vom Konsumenten als attraktiv empfundenen Geruch und Geschmack aus, insbesondere einen ausgeprägt karamellartig-nussigen Geruch und/oder Geschmack sowie einen deutlich reduzierten erdigen Geruch und/oder Geschmack.

### Beispiel 3:

Eine getrocknete, erste Saccharosekristallfraktion erhalten gemäß Beispiel 1, Figuren 1, 2 und 4 nach Durchführung von Verfahrensschritten a) bis f2) und ii) (EU2-Zucker, Körnung M) wurde mit 5,5 Gew.-% (bezogen auf das Gesamtgewicht der Magmapräparation) zweiter Mutterlauge (Rohzucker-Grünablauf) zum Erhalt von Magmapräparationen vermischt (Verfahrensschritt f3)) und homogenisiert. Es wurde dementsprechend eine Magmapräparation mit einem Mutterlaugengehalt von 5,5 Gew.-% und 94,5 Gew.-% Saccharosekristallfraktion (jeweils bezogen auf das Gesamtgewicht der Magmapräparation) erhalten.

Diese Magmapräparation wurde in Verfahrensschritt x) mit 9 Gew. % (bezogen auf das Gesamtgewicht der nach Zugabe des Puderzuckers erhaltenen Magmapräparation) Puderzucker, der aus Saccharose einer besonders feinen Körnung besteht, versehen (Verfahrensschritt x), siehe Figur 5). Die Zugabe des Puderzuckers wurde bei einem reduzierten Druck von ca. 700 mbar durchgeführt. Alternativ kann die Zugabe auch bei atmosphärischem Druck oder erhöhtem Druck durchgeführt werden. Alternativ kann als Puderzucker auch eine gemahlene Saccharosekristallfraktion zum Einsatz kommen. In dem hier beschriebenen Fall wurde ein gemahlener Kristallzucker einer feinen Körnung verwendet. Spezifiziert wurde diese Kristallfraktion durch einen Kristallanteil von 70 % kleiner oder gleich 32 µm. Diese Präparation wird homogenisiert und anschließend mit Heißluft getrocknet (Verfahrensschritt g).

Die dadurch erhaltene erfindungsgemäße Roh-Rübenzucker-Probe (202104243) wurden mittels Gaschromatographie (GC-MS, Methode: Festphasenmikroextraktion SPME) analysiert und die in den Proben enthaltenen Geruchsstoffe bestimmt. Weiterhin wurden die Farbe-in-Lösung der Proben in ICUMSA-Einheiten [IE] und der Gesamtwassergehalt titrimetrisch nach Karl-Fischer (KF) in [g Wasser/100g Rohzuckerpräparation] bestimmt. Zusätzlich wurde der Gehalt an 15 freien α-Aminosäuren (D, E, N, S, Q, H, G, T, R, A, Y, C, V, M, W, F, I, L, K, P) ) und γ-Aminobuttersäure (GABA) sowie der α-Amino-Stickstoffgehalt in [mg α-Amino-Stickstoff beziehungsweise freien Aminosäuren/kg Rohzuckerpräparation] mittels HPLC (Chromatographische Auftrennung auf einer RP-HPLC mit Vorsäulenderivatisierung durch OPA und FMOC, s. "Agilent application note 5990-4547EN") und der Saccharose-, Fructose- und Glucose- (Invertzucker-) Gehalt mittels HPLC bestimmt.

**Tabelle 9: Trockensubstanzgehalt, Gesamtwassergehalt und Farbe in Lösung**

| **Probe** | 202104243 | |
|---|---|---|
| **TS** | 99,8 | g/100g |
| **Wassergehalt ges. (KF) [g/100g]** | 0,25 | g/100g |
| **Farbe i.L.** | 1023 | IE |

Die erhaltene Probe 202104243 zeichnete sich durch hohe Lagerstabilität aus.

**Tabelle 10: Gehalte von Aromen in Roh-Rübenzucker in [µg/kg]**

| **Probe** | 202104243 | |
|---|---|---|
| **DMDS** | 3 | µg/kg |
| **Pyrazin** | 0,7 | µg/kg |
| **2-MP** | 5,9 | µg/kg |
| **2.5-DMP** | 9,1 | µg/kg |
| **2-EP** | 0,6 | µg/kg |
| **2.3-DMP** | 0,7 | µg/kg |
| **2.3.5-TMP** | 7,9 | µg/kg |
| **2-E-3,6-DP** | 1,48 | µg/kg |
| **2-E-3,5-DP** | 0,81 | µg/kg |
| **Tetramethylpyrazin** | 0,95 | µg/kg |
| **SBMOP** | 0,005 | µg/kg |

**Tabelle 11: Gehalte an nachweisbaren freien Aminosäuren in einer Roh-Rübenzucker-Probe in [mg freie Aminosäure/kg Rohzuckerpräparation]**

| **Probe** | 202104243 | |
|---|---|---|
| **ASP** | 46 | mg/kg |
| **GLU** | 73 | mg/kg |
| **GLY** | 72 | mg/kg |
| **G-ABA** | 67 | mg/kg |

**Tabelle 12: Glucose- und Fructosegehalte**

| **Probe** | 202104243 | |
|---|---|---|
| **Glucose** | <10 | mg/kg |
| **Fructose** | <10 | mg/kg |

### Beispiel 4:

Eine getrocknete, erste Saccharosekristallfraktion erhalten gemäß Beispiel 1, Figuren 1, 2 und 4 nach Durchführung von Verfahrensschritten a) bis f2) und ii) (EU2-Zucker, Körnung M) wurde mit 5,2 Gew.-% (bezogen auf das Gesamtgewicht der Magmapräparation) zweiter Mutterlauge (Rohzucker-Grünablauf) zum Erhalt von Magmapräparationen vermischt (Verfahrensschritt f3)) und homogenisiert. Es wurde dementsprechend eine Magmapräparation mit einem Mutterlaugengehalt von 5,2 Gew.-% und 94,8 Gew.-% Saccharosekristallfraktion (jeweils bezogen auf das Gesamtgewicht der Magmapräparation) erhalten.

Diese Magmapräparation wurde in Verfahrensschritt x) mit 8,6 Gew. % (bezogen auf das Gesamtgewicht der nach Zugabe des Puderzuckers erhaltenen Magmapräparation) Puderzucker, der aus Saccharose einer besonders feinen Körnung besteht, versehen (Verfahrensschritt x), siehe Figur 5). Die Zugabe des Puderzuckers wurde bei einem reduzierten Druck von ca. 700 mbar durchgeführt. Alternativ kann die Zugabe auch bei atmosphärischem Druck oder erhöhtem Druck durchgeführt werden. Alternativ kann als Puderzucker auch gemahlene Saccharose zum Einsatz kommen. In dem hier beschriebenen Fall wurde ein gemahlener Kristallzucker einer feinen Körnung verwendet. Spezifiziert wurde diese Kristallfraktion durch einen Kristallanteil von 70 % kleiner oder gleich 32 µm. Diese Präparation wird homogenisiert und anschließend bei reduziertem Druck getrocknet (Verfahrensschritt g).

Die dadurch erhaltene erfindungsgemäße Roh-Rübenzucker Probe (202105375) wurden mittels Gaschromatographie (GC-MS, Methode: Festphasenmikroextraktion SPME) analysiert und die in den Proben enthaltenen Geruchsstoffe bestimmt. Weiterhin wurden die Farbe-in-Lösung der Proben in ICUMSA-Einheiten [IE] und der Gesamtwassergehalt titrimetrisch nach Karl-Fischer (KF) in [g Wasser/100g Rohzuckerpräparation] bestimmt. Zusätzlich wurde der Gehalt an 15 freien α-Aminosäuren (D, E, N, S, Q, H, G, T, R, A, Y, C, V, M, W, F, I, L, K, P) und γ-Aminobuttersäure (GABA) sowie der α-Amino-Stickstoffgehalt in [mg α-Amino-Stickstoff beziehungsweise freien Aminosäuren/kg Rohzuckerpräparation] mittels HPLC (Chromatographische Auftrennung auf einer RP-HPLC mit Vorsäulenderivatisierung durch OPA und FMOC, s. "Agilent application note 5990-4547EN") und der Saccharose-, Fructose- und Glucose- (Invertzucker-) Gehalt mittels HPLC bestimmt.

Die erhaltene Probe 202105375 zeichnete sich durch hohe Lagerstabilität aus.

**Tabelle 13: Trockensubstanzgehalt, Gesamtwassergehalt und Farbe in Lösung**

| **Probe** | 202105375 | |
|---|---|---|
| **TS** | 99,63 | g/100g |
| **Wassergehalt ges. (KF) [g/100g]** | 0,44 | g/100g |
| **Farbe i.L.** | 1263 | IE |

**Tabelle 14: Gehalte von Aromen in Roh-Rübenzucker in [µg/kg]**

| **Probe** | 202105375 | |
|---|---|---|
| **Pyrazin** | 1,6 | µg/kg |
| **2-MP** | 8,1 | µg/kg |
| **2.5-DMP** | 15 | µg/kg |
| **2-EP** | 0,6 | µg/kg |
| **2.3-DMP** | 2,2 | µg/kg |
| **2.3.5-TMP** | 9,37 | µg/kg |
| **2-E-3,6-DP** | 0,61 | µg/kg |
| **2-E-3,5-DP** | 0,47 | µg/kg |
| **Tetramethylpyrazin** | 0,43 | µg/kg |

**Tabelle 15: Gehalte an nachweisbaren freien Aminosäuren in einer Roh-Rübenzucker-Probe in [mg freie Aminosäure/kg Rohzuckerpräparation]**

| **Probe** | 202105375 | |
|---|---|---|
| **ASP** | 72 | mg/kg |
| **GLU** | 79 | mg/kg |
| **GLY** | 75 | mg/kg |
| **G-ABA** | 75 | mg/kg |

**Tabelle 16: Glucose- und Fructosegehalte**

| **Probe** | 202105375 | |
|---|---|---|
| **Glucose** | 15 | mg/kg |
| **Fructose** | 30 | mg/kg |

## Patentansprüche

1. Verfahren zur Herstellung einer getrockneten Rohzuckerpräparation aus Zuckerrübenmaterial umfassend die Verfahrensschritte:
a) Bereitstellen von Zuckerrübenmaterial,
b) Durchführen einer Rohsaftextraktion des Zuckerrübenmaterials zum Erhalt von Rohsaft,
c) Durchführen einer Rohsaftreinigung zum Erhalt von Dünnsaft,
d) Aufkonzentrieren von Dünnsaft zum Erhalt von Dicksaft, und
e) Durchführen einer Kristallisation des Dicksafts zum Erhalt einer ersten Magmapräparation enthaltend eine erste Saccharosekristallfraktion und eine erste Mutterlauge,
f) Einstellen des Gehalts an Saccharosekristallfraktion und Mutterlauge in der ersten Magmapräparation zum Erhalt einer Magmapräparation enthaltend 76 bis 98 Gew.-% Saccharosekristallfraktion und 2 bis 24 Gew.-% Mutterlauge (jeweils bezogen auf das Gesamtgewicht der Magmapräparation) und
g) Trocknen der in Verfahrensschritt f) erhaltenen Magmapräparation zum Erhalt der getrockneten Rohzuckerpräparation.

2. Verfahren nach Anspruch 1, wobei in Verfahrensschritt f) der Gehalt an Saccharosekristallfraktion und Mutterlauge eingestellt wird in Form von Verfahrensschritt f1), und wobei Verfahrensschritt f1) ein teilweises Abtrennen der ersten Mutterlauge von der ersten Saccharosekristallfraktion durch Zentrifugation und/oder Filtration bis zu einem Mutterlaugengehalt von 2 bis 24 Gew.-% zum Erhalt einer Magmapräparation enthaltend 76 bis 98 Gew.-% einer Saccharosekristallfraktion und 2 bis 24 Gew.-% Mutterlauge (jeweils bezogen auf das Gesamtgewicht der Magmapräparation) ist.

3. Verfahren nach Anspruch 2, wobei in Verfahrensschritt f1) 50 bis 97 Gew.-% der ersten Mutterlauge (bezogen auf das Gesamtgewicht der ersten Mutterlauge) von der ersten Magmapräparation durch Zentrifugation oder Filtration abgetrennt werden, zum Erhalt einer Magmapräparation enthaltend 76 bis 98 Gew.-% einer Saccharosekristallfraktion und 2 bis 24 Gew.-% Mutterlauge (bezogen auf das Gesamtgewicht der Magmapräparation).

4. Verfahren nach Anspruch 1, wobei in Verfahrensschritt f) der Gehalt an Saccharosekristallfraktion und Mutterlauge eingestellt wird in Form der Verfahrensschritte f2) und f3), wobei Verfahrensschritt f2) ein teilweises oder vollständiges Abtrennen der ersten Mutterlauge von der ersten Saccharosekristallfraktion durch Zentrifugation und/oder Filtration ist und wobei Verfahrensschritt f3) eine Zugabe einer anderen Mutterlauge zu der ersten Saccharosekristallfraktion zum Erhalt einer Magmapräparation enthaltend 76 bis 98 Gew.-% einer Saccharosekristallfraktion und 2 bis 24 Gew.-% Mutterlauge (jeweils bezogen auf das Gesamtgewicht der Magmapräparation) ist.

5. Verfahren nach Anspruch 4, wobei nach Durchführung von Verfahrensschritt f2) die nach vollständigem Abtrennen erhaltene Saccharosekristallfraktion i) gewaschen, ii) getrocknet oder iii) gewaschen und getrocknet wird, bevor gemäß Verfahrensschritt f3) eine andere Mutterlauge hinzugefügt wird.

6. Verfahren nach einem der Ansprüche 2 bis 5, wobei der in Verfahrensschritt f1) oder f2) abgetrennte, mindestens eine Anteil der ersten Mutterlauge einer Kristallisation unterzogen wird zum Erhalt von einer zweiten Magmapräparation, enthaltend eine zweite Saccharosekristallfraktion und eine zweite Mutterlauge.

7. Verfahren nach einem der Ansprüche 4 bis 6, wobei die in Verfahrensschritt f3) hinzugefügte andere Mutterlauge die erste, zweite und/oder eine weitere Mutterlauge, insbesondere die zweite Mutterlauge, ist.

8. Verfahren nach einem der vorhergehenden Ansprüche, wobei der Saccharosegehalt der aus der Kristallisation von Dicksaft stammenden ersten Magmapräparation 55 bis 92 Gew.-% (bezogen auf das Gesamtgewicht der ersten Magmapräparation) beträgt.

9. Verfahren nach einem der vorhergehenden Ansprüche, wobei der Saccharosegehalt der aus der Kristallisation von Dicksaft stammenden ersten Magmapräparation mindestens 90 Gew.-% (bezogen auf das Gesamtgewicht der Trockenmasse der ersten Magmapräparation) beträgt.

10. Verfahren nach einem der vorhergehenden Ansprüche 1 bis 9, wobei das Durchführen einer Kristallisation in Verfahrensschritt e) das Durchführen einer Verdampfungskristallisation ist.

11. Verfahren nach einem der vorhergehenden Ansprüche 1 bis 10, wobei in einem Verfahrensschritt x) zu der in Verfahrensschritt f) erhaltenen Magmapräparation enthaltend 76 bis 98 Gew.-% Saccharosekristallfraktion und 2 bis 24 Gew.-% Mutterlauge (jeweils bezogen auf das Gesamtgewicht der Magmapräparation) vor dem Durchführen von Verfahrensschritt g) Puderzucker hinzugegeben wird.

12. Getrocknete Rohzuckerpräparation hergestellt mittels eines der Verfahren der Ansprüche 1 bis 11, **gekennzeichnet durch** einen Gehalt an mindestens 0,2 µg/kg DMDS (Dimethyldisulfid), mindestens 0,5 µg/kg Pyrazin, mindestens 1,0 µg/kg 2-MP (2-Methylpyrazin), mindestens 5,0 µg/kg 2,5-DMP (2,5-Dimethylpyrazin), mindestens 0,2 µg/kg 2-EP (2-Ethylpyrazin), mindestens 0,3 µg/kg 2,3-DMP (2,3-Dimethylpyrazin), mindestens 2,0 µg/kg 2,3,5-TMP (2,3,5-Trimethylpyrazin), mindestens 0,4 µg/kg 2-E-3,6-DMP (2-Ethyl-3,6-dimethylpyrazin), mindestens 0,2 µg/kg 2-E-3,5-DMP (2-Ethyl-3,5-dimethylpyrazin), mindestens 0,25 µg/kg Tetramethylpyrazin (2, 3, 5, 6-Tetramethylpyrazin), mindestens 0,03 µg/kg 2,3-DE-5-MP (2,3-Diethyl-5-Methylpyrazin), mindestens 0,003 µg/kg SBMOP (2-sec-Butyl-3-Methoxypyrazin) oder mindestens 0,01 µg/kg Geosmin (jeweils bezogen auf das Gesamtgewicht der getrockneten Rohzuckerpräparation).

13. Getrocknete Rohzuckerpräparation nach Anspruch 12, **gekennzeichnet durch** einen Gehalt an
0,2 bis 10 µg/kg DMDS (Dimethyldisulfid),
0,5 bis 10 µg/kg Pyrazin,
1,0 bis 50 µg/kg 2-MP (2-Methylpyrazin),
5,0 bis 300 µg/kg 2,5-DMP (2,5-Dimethylpyrazin),
0,2 bis 5 µg/kg 2-EP (2-Ethylpyrazin),
0,3 bis 30 µg/kg 2,3-DMP (2,3-Dimethylpyrazin),
2,0 bis 150 µg/kg 2,3,5-TMP (2,3,5-Trimethylpyrazin),
0,4 bis 20 µg/kg 2-E-3,6-DMP (2-Ethyl-3,6-dimethylpyrazin),
0,2 bis 10 µg/kg 2-E-3,5-DMP (2-Ethyl-3,5-dimethylpyrazin)
0,25 bis 10 µg/kg Tetramethylpyrazin (2, 3, 5, 6-Tetramethylpyrazin),
0,03 bis 1 µg/kg 2,3-DE-5-MP (2,3-Diethyl-5-Methylpyrazin),
0,003 bis 0,05 µg/kg SBMOP (2-sec-Butyl-3-Methoxypyrazin) und
0,01 bis 0,15 µg/kg Geosmin (jeweils bezogen auf das Gesamtgewicht der getrockneten Rohzuckerpräparation).

14. Getrocknete Rohzuckerpräparation nach einem der Ansprüche 12 oder 13, **gekennzeichnet durch** einen α-Amino-Stickstoff-Gehalt von 20 bis 150 mg/kg (bezogen auf das Gesamtgewicht der getrockneten Rohzuckerpräpration).

15. Getrocknete Rohzuckerpräparation nach einem der Ansprüche 12 bis 14, **gekennzeichnet durch** einen Gehalt von 10 bis 180 mg/kg γ-Aminobuttersäure (bezogen auf das Gesamtgewicht der getrockneten Rohzuckerpräparation).

16. Getrocknete Rohzuckerpräparation nach einem der Ansprüche 12 bis 15, **gekennzeichnet durch** Gehalte an freien α-Aminosäuren, umfassend, insbesondere bestehend aus 10 bis 300 mg/kg Asparaginsäure (ASP, D), 10 bis 250 mg/kg Glutaminsäure (GLU, E), 0 bis 70 mg/kg Asparagin (ASN, N), 5 bis 110 mg/kg Serin (SER, S), 0 bis 5 mg/kg Glutamin (GLN, Q), 0 bis 5 mg/kg Histidin (HIS, H), 5 bis 110 mg/kg Glycin (GLY, G), 0 bis 50 mg/kg Threonin (THR, T), 0 bis 30 mg/kg Arginin (ARG, R), 5 bis 140 mg/kg Alanin (ALA, A), 15 bis 300 mg/kg Tyrosin (TYR, Y), 0 bis 10 mg/kg Cystein (CYS, C), 0 bis 100 mg/kg Valin (VAL, V), 0 bis 5 mg/kg Methionin (MET, M), 0 bis 60 mg/kg Tryptophan (TRP, W), 0 bis 40 mg/kg Phenylalanin (PHE, F), 5 bis 150 mg/kg Isoleucin (ILE, I), 5 bis 100 mg/kg Leucin (LEU, L), 0 bis 15 mg/kg Lysin (LYS, K) und 0 bis 90 mg/kg Prolin (PRO, P) (jeweils bezogen auf das Gesamtgewicht der getrockneten Rohzuckerpräparation).

## Claims

1. A method for producing a dried raw sugar preparation from sugar beet material comprising the method steps:
a) providing sugar beet material,
b) carrying out a raw juice extraction of the sugar beet material to obtain raw juice,
c) carrying out a raw juice purification to obtain thin juice,
d) concentrating thin juice to obtain thick juice, and
e) carrying out a crystallisation of the thick juice to obtain a first magma preparation containing a first sucrose crystal fraction and a first mother liquor,
f) adjusting the content of sucrose crystal fraction and mother liquor in the first magma preparation to obtain a magma preparation containing 76 to 98 wt.% sucrose crystal fraction and 2 to 24 wt.% mother liquor (each based on the total weight of the magma preparation) and
g) drying the magma preparation obtained in method step f) to obtain the dried raw sugar preparation.

2. The method of claim 1, wherein in method step f) the content of sucrose crystal fraction and mother liquor is adjusted in the form of method step f1), and wherein method step f1) is a partial separating of the first mother liquor from the first sucrose crystal fraction by centrifugation and/or filtration to a mother liquor content of 2 to 24 wt.% to obtain a magma preparation containing 76 to 98 wt.% of a sucrose crystal fraction and 2 to 24 wt.% mother liquor (each based on the total weight of the magma preparation).

3. The method of claim 2, wherein in method step f1) 50 to 97 wt.% of the first mother liquor (based on the total weight of the first mother liquor) are separated from the first magma preparation by centrifugation or filtration to obtain a magma preparation containing 76 to 98 wt.% of a sucrose crystal fraction and 2 to 24 wt.% mother liquor (based on the total weight of the magma preparation).

4. The method of claim 1, wherein in method step f) the content of sucrose crystal fraction and mother liquor is adjusted in the form of method steps f2) and f3), wherein method step f2) is a partial or complete separating of the first mother liquor from the first sucrose crystal fraction by centrifugation and/or filtration and wherein method step f3) is a addition of another mother liquor to the first sucrose crystal fraction to obtain a magma preparation containing 76 to 98 wt.% of a sucrose crystal fraction and 2 to 24 wt.% mother liquor (each based on the total weight of the magma preparation).

5. The method of claim 4, wherein, after carrying out method step f2), the sucrose crystal fraction obtained after complete separation is i) washed, ii) dried or iii) washed and dried before another mother liquor is added according to method step f3).

6. The method of one of claims 2 to 5, wherein the at least one proportion of the first mother liquor separated in method step f1) or f2) is subjected to a crystallisation to obtain a second magma preparation containing a second sucrose crystal fraction and a second mother liquor.

7. The method of one of claims 4 to 6, wherein the other mother liquor added in method step f3) is the first, second and/or a further mother liquor, in particular the second mother liquor.

8. The method of one of the preceding claims, wherein the sucrose content of the first magma preparation derived from the crystallisation of thick juice is 55 to 92 wt.% (based on the total weight of the first magma preparation).

9. The method of one of the preceding claims, wherein the sucrose content of the first magma preparation derived from the crystallisation of thick juice is at least 90 wt.% (based on the total weight of the dry matter of the first magma preparation).

10. The method of one of the preceding claims 1 to 9, wherein the carrying out of a crystallisation in method step e) is the carrying out of an evaporation crystallisation.

11. The method of one of the preceding claims 1 to 10, wherein in a method step x) icing sugar is added to the magma preparation obtained in method step f) containing 76 to 98 wt.% saccharose crystal fraction and 2 to 24 wt.% mother liquor (each based on the total weight of the magma preparation) before carrying out method step g).

12. A dried raw sugar preparation produced by means of one of the methods of claims 1 to 11, **characterised by** a content of at least 0.2 µg/kg DMDS (dimethyl disulphide), at least 0.5 µg/kg pyrazine, at least 1.0 µg/kg 2-MP (2-methylpyrazine), at least 5.0 µg/kg 2,5-DMP (2,5-dimethylpyrazine), at least 0.2 µg/kg 2-EP (2-ethylpyrazine), at least 0.3 µg/kg 2,3-DMP (2,3-dimethylpyrazine), at least 2.0 µg/kg 2,3,5-TMP (2,3,5-trimethylpyrazine), at least 0.4 µg/kg 2-E-3,6-DMP (2-ethyl-3,6-dimethylpyrazine), at least 0.2 µg/kg 2-E-3,5-DMP (2-ethyl-3,5-dimethylpyrazine), at least 0.25 µg/kg tetramethylpyrazine (2, 3, 5, 6-tetramethylpyrazine), at least 0.03 µg/kg 2,3-DE-5-MP (2,3-diethyl-5-methylpyrazine), at least 0.003 µg/kg SBMOP (2-sec-butyl-3-methoxypyrazine) or at least 0.01 µg/kg geosmin (each based on the total weight of the dried raw sugar preparation).

13. The dried raw sugar preparation of claim 12, **characterised by** a content of
0.2 to 10 µg/kg DMDS (dimethyl disulphide),
0.5 to 10 µg/kg pyrazine,
1.0 to 50 µg/kg 2-MP (2-methylpyrazine),
5.0 to 300 µg/kg 2,5-DMP (2,5-dimethylpyrazine),
0.2 to 5 µg/kg 2-EP (2-ethylpyrazine),
0.3 to 30 µg/kg 2,3-DMP (2,3-dimethylpyrazine),
2.0 to 150 µg/kg 2,3,5-TMP (2,3,5-trimethylpyrazine),
0.4 to 20 µg/kg 2-E-3,6-DMP (2-ethyl-3,6-dimethylpyrazine),
0.2 to 10 µg/kg 2-E-3,5-DMP (2-ethyl-3,5-dimethylpyrazine)
0.25 to 10 µg/kg tetramethylpyrazine (2, 3, 5, 6-tetramethylpyrazine),
0.03 to 1 µg/kg 2,3-DE-5-MP (2,3-diethyl-5-methylpyrazine),
0.003 to 0.05 µg/kg SBMOP (2-sec-butyl-3-methoxypyrazine) and 0.01 to 0.15 µg/kg geosmin (each based on the total weight of the dried raw sugar preparation).

14. The dried raw sugar preparation of one of claims 12 or 13, **characterised by** an α-amino nitrogen content of 20 to 150 mg/kg (based on the total weight of the dried raw sugar preparation).

15. The dried raw sugar preparation of one of claims 12 to 14, **characterised by** a content of 10 to 180 mg/kg γ-aminobutyric acid (based on the total weight of the dried raw sugar preparation).

16. The dried raw sugar preparation of one of claims 12 to 15, **characterised by** contents of free α-amino acids comprising, in particular consisting of 10 to 300 mg/kg aspartic acid (ASP, D), 10 to 250 mg/kg glutamic acid (GLU, E), 0 to 70 mg/kg asparagine (ASN, N), 5 to 110 mg/kg serine (SER, S), 0 to 5 mg/kg glutamine (GLN, Q), 0 to 5 mg/kg histidine (HIS, H), 5 to 110 mg/kg glycine (GLY, G), 0 to 50 mg/kg threonine (THR, T), 0 to 30 mg/kg arginine (ARG, R), 5 to 140 mg/kg alanine (ALA, A), 15 to 300 mg/kg tyrosine (TYR, Y), 0 to 10 mg/kg cysteine (CYS, C), 0 to 100 mg/kg valine (VAL, V), 0 to 5 mg/kg methionine (MET, M), 0 to 60 mg/kg tryptophan (TRP, W), 0 to 40 mg/kg phenylalanine (PHE, F), 5 to 150 mg/kg isoleucine (ILE, I), 5 to 100 mg/kg leucine (LEU, L), 0 to 15 mg/kg lysine (LYS, K) and 0 to 90 mg/kg proline (PRO, P) (each based on the total weight of the dried raw sugar preparation).

## Revendications

1. Un procédé de production d'une préparation de sucre brut séché à partir de matière de betterave de sucre, comprenant les étapes de procédé suivantes :
a) fournir de la matière de betterave de sucre,
b) effectuer une extraction du jus brut de la matière de betterave de sucre pour obtenir du jus brut,
c) effectuer une purification du jus brut pour obtenir du jus clair,
d) concentrer le jus clair pour obtenir du jus épais, et
e) effectuer une cristallisation du jus épais pour obtenir une première préparation de magma contenant une première fraction de cristaux de saccharose et une première liqueur mère,
f) ajuster la teneur en fraction de cristaux de saccharose et de la liqueur mère dans la première préparation de magma pour obtenir une préparation de magma contenant 76 à 98 % en poids de fraction de cristaux de saccharose et 2 à 24 % en poids de liqueur mère (chacun par rapport au poids total de la préparation de magma) et
g) sécher la préparation de magma obtenue dans l'étape de procédé f) pour obtenir la préparation de sucre brut séché.

2. Le procédé selon la revendication 1, dans lequel, dans l'étape de procédé f), la teneur en fraction de cristaux de saccharose et en liqueur mère est ajustée sous la forme de l'étape de procédé f1), et dans lequel l'étape de procédé f1) est une séparation partielle de la première liqueur mère de la première fraction de cristaux de saccharose par centrifugation et/ou filtration jusqu'à une teneur en liqueur mère de 2 à 24 % en poids pour obtenir une préparation de magma contenant 76 à 98 % en poids d'une fraction de cristaux de saccharose et 2 à 24 % en poids de liqueur mère (chacun par rapport au poids total de la préparation de magma).

3. Le procédé selon la revendication 2, dans lequel, dans l'étape de procédé f1), 50 à 97 % en poids de la première liqueur mère (par rapport au poids total de la première liqueur mère) sont séparés de la première préparation de magma par centrifugation ou filtration pour obtenir une préparation de magma contenant 76 à 98 % en poids d'une fraction de cristaux de saccharose et 2 à 24 % en poids de liqueur mère (par rapport au poids total de la préparation de magma).

4. Le procédé selon la revendication 1, dans lequel, dans l'étape de procédé f), la teneur en fraction de cristaux de saccharose et liqueur mère est ajustée sous la forme des étapes de procédé f2) et f3), dans lequel l'étape de procédé f2) est une séparation partielle ou complète de la première liqueur mère de la première fraction de cristaux de saccharose par centrifugation et/ou filtration et dans lequel l'étape de procédé f3) est une addition d'une autre liqueur mère à la première fraction de cristaux de saccharose pour obtenir une préparation de magma contenant 76 à 98 % en poids d'une fraction de cristaux de saccharose et 2 à 24 % en poids de liqueur mère (chacun par rapport au poids total de la préparation de magma).

5. Le procédé selon la revendication 4, dans lequel, après avoir effectué l'étape de procédé f2), la fraction de cristaux de saccharose obtenue après séparation complète est i) lavée, ii) séchée ou iii) lavée et séchée avant qu'une autre liqueur mère soit ajoutée selon l'étape de procédé f3).

6. Le procédé selon l'une des revendications 2 à 5, dans lequel la au moins une proportion de la première liqueur mère séparée dans l'étape de procédé f1) ou f2) est soumise à une cristallisation pour obtenir une deuxième préparation de magma contenant une deuxième fraction de cristaux de saccharose et une deuxième liqueur mère.

7. Le procédé selon l'une des revendications 4 à 6, dans lequel l'autre liqueur mère ajoutée dans l'étape de procédé f3) est la première, la deuxième et/ou une autre liqueur mère, en particulier la deuxième liqueur mère.

8. Le procédé selon l'une des revendications précédentes, dans lequel la teneur en saccharose de la première préparation de magma provenant de la cristallisation du jus épais est de 55 à 92 % en poids (par rapport au poids total de la première préparation de magma).

9. Le procédé selon l'une des revendications précédentes, dans lequel la teneur en saccharose de la première préparation de magma provenant de la cristallisation du jus épais est d'au moins 90 % en poids (par rapport au poids total de la matière sèche de la première préparation de magma).

10. Le procédé selon l'une des revendications 1 à 9 précédentes, dans lequel effectuer une cristallisation dans l'étape de procédé e) est effectuer une cristallisation par évaporation.

11. Le procédé selon l'une des revendications 1 à 10 précédentes, dans lequel, dans une étape de procédé x), du sucre glace est ajouté à la préparation de magma obtenue dans l'étape de procédé f) contenant 76 à 98 % en poids de fraction de cristaux de saccharose et 2 à 24 % en poids de liqueur mère (chacun par rapport au poids total de la préparation de magma) avant de effectuer l'étape de procédé g).

12. Une préparation de sucre brut séché produite au moyen d'un des procédés selon les revendications 1 à 11, **caractérisée par** une teneur en au moins 0,2 µg/kg de DMDS (diméthyl disulfure), au moins 0,5 µg/kg de pyrazine, au moins 1,0 µg/kg de 2-MP (2-méthylpyrazine), au moins 5,0 µg/kg de 2,5-DMP (2,5-diméthylpyrazine), au moins 0,2 µg/kg de 2-EP (2-éthylpyrazine), au moins 0,3 µg/kg de 2,3-DMP (2,3-diméthylpyrazine), au moins 2,0 µg/kg de 2,3,5-TMP (2,3,5-triméthylpyrazine), au moins 0,4 µg/kg de 2-E-3,6-DMP (2-éthyl-3,6-diméthylpyrazine), au moins 0,2 µg/kg de 2-E-3,5-DMP (2-éthyl-3,5-diméthylpyrazine), au moins 0,25 µg/kg de tétraméthylpyrazine (2, 3, 5, 6-tétraméthylpyrazine), au moins 0,03 µg/kg de 2,3-DE-5-MP (2,3-diéthyl-5-méthylpyrazine), au moins 0,003 µg/kg de SBMOP (2-sec-butyl-3-méthoxypyrazine) ou au moins 0,01 µg/kg de géosmine (chacun par rapport au poids total de la préparation de sucre brut séché).

13. La préparation de sucre brut séché selon la revendication 12, **caractérisée par** une teneur en
0,2 à 10 µg/kg de DMDS (diméthyl disulfure),
0,5 à 10 µg/kg de pyrazine,
1,0 à 50 µg/kg de 2-MP (2-méthylpyrazine),
5,0 à 300 µg/kg de 2,5-DMP (2,5-diméthylpyrazine),
0,2 à 5 µg/kg de 2-EP (2-éthylpyrazine),
0,3 à 30 µg/kg de 2,3-DMP (2,3-diméthylpyrazine),
2,0 à 150 µg/kg de 2,3,5-TMP (2,3,5-triméthylpyrazine),
0,4 à 20 µg/kg de 2-E-3,6-DMP (2-éthyl-3,6-diméthylpyrazine),
0,2 à 10 µg/kg de 2-E-3,5-DMP (2-éthyl-3,5-diméthylpyrazine)
0,25 à 10 µg/kg de tétraméthylpyrazine (2, 3, 5, 6-tétraméthylpyrazine),
0,03 à 1 µg/kg de 2,3-DE-5-MP (2,3-diéthyl-5-méthylpyrazine),
0,003 à 0,05 µg/kg de SBMOP (2-sec-butyl-3-méthoxypyrazine) et 0,01 à 0,15 µg/kg de géosmine (chacun par rapport au poids total de la préparation de sucre brut séché).

14. La préparation de sucre brut séché selon l'une des revendications 12 ou 13, **caractérisée par** une teneur en 20 à 150 mg/kg de azote α-amino (par rapport au poids total de la préparation de sucre brut séché).

15. La préparation de sucre brut séché selon l'une des revendications 12 à 14, **caractérisée par** une teneur en 10 à 180 mg/kg d'acide γ-aminobutyrique (par rapport au poids total de la préparation de sucre brut séché).

16. La préparation de sucre brut séché selon l'une des revendications 12 à 15, **caractérisée par** des teneurs en acides α-aminés libres comprenant, en particulier constituées, 10 à 300 mg/kg d'acide aspartique (ASP, D), 10 à 250 mg/kg d'acide glutamique (GLU, E), 0 à 70 mg/kg d'asparagine (ASN, N), 5 à 110 mg/kg de sérine (SER, S), 0 à 5 mg/kg de glutamine (GLN, Q), 0 à 5 mg/kg d'histidine (HIS, H), 5 à 110 mg/kg de glycine (GLY, G), 0 à 50 mg/kg de thréonine (THR, T), 0 à 30 mg/kg d'arginine (ARG, R), 5 à 140 mg/kg d'alanine (ALA, A), 15 à 300 mg/kg de tyrosine (TYR, Y), 0 à 10 mg/kg de cystéine (CYS, C), 0 à 100 mg/kg de valine (VAL, V), 0 à 5 mg/kg de méthionine (MET, M), 0 à 60 mg/kg de tryptophane (TRP, W), 0 à 40 mg/kg de phénylalanine (PHE, F), 5 à 150 mg/kg d'isoleucine (ILE, I), 5 à 100 mg/kg de leucine (LEU, L), 0 à 15 mg/kg de lysine (LYS, K) et 0 à 90 mg/kg de proline (PRO, P) (chacun par rapport au poids total de la production de sucre brut séché).
